# EUROPÄISCHE PATENTANMELDUNG

(11) **EP 4 331 879 A1**
(43) Veröffentlichungstag der Anmeldung: **06.03.2024**
(21) Anmeldenummer: 22193782.4
(22) Anmeldetag: 02.09.2022
(51) Int. Cl.: B60H 1/32, B60H 1/00

(54) **STRASSENNUTZFAHRZEUG UMFASSEND EINE TRANSPORTKÄLTEMASCHINE**

(71) Anmelder: Schmitz Cargobull AG, 48341 Altenberge (DE)
(72) Erfinder: Rübig, Michael, 77830 Bühlertal (DE)
(74) Vertreter: Cohausz & Florack

(57) **Zusammenfassung**

Es wird ein Straßennutzfahrzeug offenbart umfassend eine Transportkältemaschine und einen elektrischen Energiespeicher, welcher in einem 12V/24V-Spannungsband betrieben wird. Die Transportkältemaschine umfasst einen Lüfter, welcher in einem 48V-Spannungsband versorgt wird. Mittel seines Spannungswandlers der Lüfter aus dem elektrischen Energiespeicher mit elektrischer Energie versorgt werden.

## Beschreibung

### Gebiet

Die Erfindung betrifft ein Straßennutzfahrzeug umfassend eine Transportkältemaschine, insbesondere eine Transportkältemaschine zum Kühlen eines Laderaums des Straßennutzfahrzeugs.

### Hintergrund

Eine solche Transportkältemaschine kann beispielsweise gekühlte Luft oder gewärmte Luft erzeugen, die in den Laderaum des Straßennutzfahrzeugs geblasen wird. Zu diesem Zweck kann die Transportkältemaschine einen Kühlkreis bzw. Heizkreis mit einem durch einen elektrischen Motor angetriebenen Verdichter zum Verdichten eines Kühlmittels, einen Kondensator, eine Drosseleinrichtung und einen Wärmetauscher umfassen. In dem Kühlkreis strömt, bei einem kühlenden Betrieb, das von dem Verdichter verdichtete Kältemittel über den Kondensator und eine in Strömungsrichtung hinter dem Kondensator angeordnete Drosseleinrichtung, die beispielsweise als Stellventil ausgebildet sein kann, zu dem Wärmetauscher. In dem Wärmetauscher wird das zuvor verflüssigte Kältemittel expandiert und entzieht dabei einem getrennt von dem Kältemittel durch den Wärmetauscher geleiteten Luftstrom Wärme, so dass die Luft des Luftstroms gekühlt wird. Die gekühlte Luft dieses Luftstroms wird anschließend in den Laderaum des Straßennutzfahrzeugs geblasen, um diesen zu kühlen.

Häufig wird der elektrische Motor einer solchen Transportkältemaschine von einem Generator, der von einem in einem optimalen Betriebspunkt laufenden Verbrennungsmotor angetrieben wird, mit elektrischer Energie versorgt wird. Ein Vorteil eines von einem Verbrennungsmotors angetriebenen Generators ist unter anderem, dass dieser hohe Momentanleistungen bereitstellen kann, wie sie für den Betrieb einer Transportkältemaschine notwendig sind. Ein Nachteil ist allerdings, dass der Verbrennungsmotor, welcher den Generator antreibt, nicht bei beliebig niedrigen Leistungen betrieben werden kann. Beispielsweise konsumiert der Verbrennungsmotor auch im Leerlauf eine Mindestmenge an Treibstoff pro Zeiteinheit. Wenn der vom Motor angetriebene Generator nur eine geringe oder auch keine elektrische Leistung bereitstellen soll, kann sich somit ein Missverhältnis zwischen der von dem Verbrennungsmotor aufgenommenen chemischen Energie (des Treibstoffs) und der von dem Generator bereitgestellten elektrischen Energie ergeben. Der Verbund aus Verbrennungsmotor und Generator hat damit bei geringen bereitgestellten elektrischen Leistungen einen extrem schlechten Wirkungsgrad. Wenn keine elektrischen Leistung bereitgestellt wird, beträgt der Wirkungsgrad im Grenzfall 0%. Gleichzeitig versursacht der Motor weiterhin einen hohen Lärmpegel, trotz kaum erzeugter elektrischer Leistung.

### Zusammenfassung einiger beispielhafter Ausführungsformen der Erfindung

Eine Aufgabe der vorliegenden Erfindung ist es daher, ein Straßennutzfahrzeug umfassend eine Transportkältemaschine derart auszugestalten und weiterzubilden, dass die Transportkältemaschine eine an ihren Leistungsbedarf angepasste Energieversorgung erhält.

Gemäß einem ersten Aspekt der Erfindung wird ein Straßennutzfahrzeug vorgeschlagen, umfassend
- einen elektrischen Energiespeicher, wobei der elektrische Energiespeicher dazu eingerichtet ist, in einem 12V/24V-Spannungsband elektrische Energie bereitzustellen,
- eine Transportkältemaschine umfassend:
   (i) zumindest einen Lüfter, wobei der Lüfter dazu eingerichtet ist, in einem 48V-Spannungsband mit elektrischer Energie betrieben zu werden,
   (ii) einen Spannungswandler, wobei der Spannungswandler dazu eingerichtet ist, einen bidirektionalen elektrischen Leistungsfluss zwischen dem 12V/24V-Spannungsband an einem 12V/24V-Anschluss des Spannungswandlers und dem 48V-Spannungsband an einem 48V-Anschluss des Spannungswandlers zu ermöglichen, wobei der 12V/24V-Anschluss mit dem elektrischen Energiespeicher elektrisch verbunden ist und der 48V-Anschluss mit dem Lüfter elektrisch verbunden ist,
   (iii) eine Energiequelle, wobei die Energiequelle dazu eingerichtet ist, die Transportkältemaschine in einem Normalbetrieb mit elektrischer Energie zu versorgen, und/oder
      einen Energieversorgungsanschluss, wobei der Energieversorgungsanschluss dazu eingerichtet ist, elektrische Energie zur Versorgung der Transportkältemaschine in dem Normalbetrieb von einer externen elektrischen Energieversorgung zu empfangen, wobei das Straßennutzfahrzeug dazu eingerichtet ist, in einem Lüfterbetrieb der Transportkältemaschine den zumindest einen Lüfter der Transportkältemaschine aus dem elektrischen Energiespeicher mittels des Spannungswandlers mit elektrischer Energie zu versorgen, wobei die Transportkältemaschine im Lüfterbetrieb weder aus der Energiequelle noch über den Energieversorgungsanschluss mit elektrischer Energie versorgt wird.

Das offenbarte Straßennutzfahrzeug ist zum Beispiel ein Lastkraftwagen, ein Anhänger oder ein Sattelauflieger. Straßennutzfahrzeuge sind insbesondere für den Transport von Gütern, vorzugsweise Stückgütern, im öffentlichen Straßenverkehr vorgesehen. Zu diesem Zweck weisen die Straßennutzfahrzeuge unterschiedliche Arten von Nutzfahrzeugaufbauten auf, welche der Aufnahme der zu transportierenden Güter in einem Innenraum, insbesondere einem Laderaum, dienen. So sind beispielsweise Kofferaufbauten mit festen Seitenwänden und einem festen Dach bekannt, welche den Innenraum umschließen. Da die Kofferaufbauten geschlossen sind, sind Kofferaufbauten in besonderem Maße für den Transport von temperaturempfindlichen Gütern, also beispielsweise für den sogenannten Kühltransport geeignet. Damit die Temperatur solcher temperaturempfindlichen Güter einen von den Gütern abhängigen Grenzwert während eines solchen Kühltransports nicht übersteigt, wird der Innenraum (Laderaum) des Straßennutzfahrzeugs gekühlt.

Das offenbarte Straßennutzfahrzeug umfasst einen elektrischen Energiespeicher.

Der elektrische Energiespeicher ist dazu eingerichtet, in einem 12V/24V-Spannungsband elektrische Energie bereitzustellen. Mit anderen Worten ist der elektrische Energiespeicher eingerichtet, elektrische Energie mit einer Spannung in dem 12V/24V-spannungsband bereitzustellen. Dabei soll unter dem Begriff 12V/24V-Spannungsband ein 12V-Spannungsband oder ein 24V-Spannungsband verstanden werden. Zum Beispiel können Spannungen mit einer Abweichung von 12V von bis zu 10% (d.h. 10,8V - 13,2V), 15% (d.h. 10,2V - 13,8V), 20% (d.h. 9,6V - 14,4V), 30% (d.h. 8,4V - 15,6V) oder 40% (d.h. 7,2V - 16,8V) noch als Spannungen des 12V-Spannungsbands verstanden werden. Gemäß einer beispielhaften Ausführungsform umfasst das 12V Spannungsband Spannungen von zumindest 9,5V und/oder bis zu 16V. Dementsprechend können zum Beispiel Spannungen mit einer Abweichung von 24V von bis zu 10% (d.h. 21,6V - 26,4V), 15% (d.h. 20,4V - 27,6V), 20% (d.h. 19,2V - 28,8V), 30% (d.h. 16,8V - 31,2V) oder 40% (d.h. 14,4V - 33,6V) noch als Spannungen des 24V-Spannungsbands verstanden werden. Gemäß einer beispielhaften Ausführungsform umfasst das 24V-Spannungsband Spannungen von zumindest 16V und/oder bis zu 32V.

Der elektrische Energiespeicher ist insbesondere dazu eingerichtet, eine Gleichspannung in dem 12V/24V-Spannungsband bereitzustellen.

Der elektrische Energiespeicher kann dazu eingerichtet sein, elektrische Energie bereitzustellen. Zusätzlich oder alternativ kann der elektrische Energiespeicher dazu eingerichtet sein, elektrische Energie aufzunehmen. In anderen Worten kann der elektrische Energiespeicher wiederaufladbar sein.

Der elektrische Energiespeicher kann beispielsweise als eine Batterie gebildet sein und/oder eine Batterie umfassen. Unter einer Batterie wird hier und im Folgenden insbesondere eine Sekundärbatterie verstanden, insbesondere ein Akkumulator, insbesondere ein elektrochemischer Akkumulator. Wenn im Folgenden von einer Batterie die Rede ist, ist damit also zumindest unter anderem eine wiederaufladbare Sekundärbatterie und/oder ein Akkumulator umfasst, welche sowohl elektrische Energie bereitstellen als auch elektrische Energie aufnehmen kann. Die hier offenbarten Batterien können also sowohl aufgeladen als auch entladen werden.

Beispielsweise kann der elektrische Energiespeicher als eine Bleibatterie, eine Lithium-Ionen Batterie, insbesondere eine Lithium-Eisen-Phosphat-Batterie (LFP), eine Nickel-Cadmium oder ein Nickel-Metall-Hybrid-Batterie, eine Natrium-Ionen-Batterie und/oder Kombinationen hieraus gebildet sein.

Wenn hier, im Folgenden und/oder Vorangehenden von einer Versorgung einer Komponente (z.B. eines elektrischen Verbrauchers) mit elektrischer Energie die Rede ist, ist damit zumindest unter anderem die Bereitstellung von elektrischer Leistung zum Betreiben der Komponente gemeint. Umgekehrt ist bei der Verwendung des Begriffs Leistung, insbesondere der Bereitstellung von Leistung zum Betreiben einer Komponente (z.B. eines elektrischen Verbrauchers), zumindest unter anderem die Übertragung von Energie, insbesondere die Versorgung der Komponente mit elektrischer Energie gemeint.

Der elektrische Energiespeicher kann ein Energiespeichermodul umfassen (z.B. in Form einer Batteriezelle). Insbesondere kann der elektrische Energiespeicher auch zwei oder mehr Speichermodule umfassen.

Der elektrische Energiespeicher kann beispielsweise dazu eingerichtet sein, ein Bordnetz des Straßennutzfahrzeugs, beispielsweise ein Bordnetz eines Anhängers, welcher das Straßennutzfahrzeug selbst oder ein Teil des Straßennutzfahrzeugs sein kann, mit elektrischer Energie zu versorgen. Beispielsweise kann der elektrische Energiespeicher dazu eingerichtet sein, elektrische Verbraucher des Straßennutzfahrzeugs mit Energie zu versorgen. Beispielsweise kann sich dabei um eine Beleuchtung, einen Teil eines Fahrassistenzsystems, Sensoren, beispielsweise Reifendrucksensoren, Abstandssensoren, elektrische Signalgeber, beispielsweise Lautsprecher oder eine Hupe, und/oder Kombinationen hieraus handeln. Die Verbraucher sind zumindest teilweise ebenfalls in einem 12V/24V-Spannungsband betrieben.

Das offenbarte Straßennutzfahrzeug umfasst ferner eine Transportkältemaschine.

Die Transportkältemaschine kann den elektrischen Energiespeicher umfassen. Alternativ kann der elektrische Energiespeicher ein von der Transportkältemaschine separates Teil des Straßennutzfahrzeugs sein.

Die Transportkältemaschine kann Teil des Straßennutzfahrzeugs sein, z.B. in und/oder an einem Kofferaufbau des Straßennutzfahrzeugs montiert sein).

Die Transportkältemaschine ist insbesondere zum Kühlen des Innenraums, beispielsweise des Laderaums, des Straßennutzfahrzeugs vorgesehen. Dies kann beispielsweise derart verstanden werden, dass die Transportkältemaschine zum Kühlen des Innenraums, insbesondere des Laderaums, des Straßennutzfahrzeugs ausgebildet ist. Zu diesem Zweck kann die Transportkältemaschine, wie oben offenbart, einen Kühlkreis umfassend einen Verdichter zum Verdichten eines Kühlmittels, einen Kondensator, eine Drosseleinrichtung und einen Wärmetauscher umfassen. Zum Beispiel kann das Kühlen des Innenraums, insbesondere des Laderaums, des Straßennutzfahrzeugs durch die Transportkältemaschine erfolgen, indem die Transportkältemaschine Luft eines durch den Wärmetauscher geleiteten Luftstroms kühlt und anschließend in den Innenraum, insbesondere Laderaum, des Straßennutzfahrzeugs bläst.

Die Transportkältemaschine umfasst zumindest einen Lüfter.

Der Lüfter kann beispielsweise dem Transport von Luft hin zu und/oder weg von dem Wärmetauscher dienen. Auch kann der Lüfter dazu dienen, Luft aus dem Innenraum des Straßennutzfahrzeugs heraus zu transportieren, beispielsweise zu der Transportkältemaschine, insbesondere zu deren Wärmetauscher. Auch kann der Lüfter beispielsweise dazu dienen, Außenluft in die Transportkältemaschine und/oder den Innenraum zu transportieren. Der Lüfter kann beispielsweise auch dazu eingerichtet sein, zumindest einen Teil der Transportkältemaschine, beispielsweise einen Motor und/oder Kompressor, zu kühlen.

Der zumindest eine Lüfter ist dazu eingerichtet in einem 48V-Spannungsband betrieben zu werden. Mit anderen Worten ist der Lüfter eingerichtet, mit einer in dem 48V-Spannungsband liegenden Spannung betrieben zu werden. Zum Beispiel können Spannungen mit einer Abweichung von 48V von bis zu 10% (d.h. 43,2V - 52,8V), 15% (d.h. 40,8V - 55,2V) oder 20% (d.h. 38,4V - 57,6V) noch als Spannungen des 48V-Spannungsbands verstanden werden. Gemäß einer beispielhaften umfasst das 48V-Spannungsband Spannungen von mindestens 24V und/oder bis zu 60V.

Gemäß einem Ausführungsbeispiel weisen die Spannungen des 12V/24V Spannungsbandes stets einen geringeren Betrag auf als die Spannungen des 48V-Spannungsbandes.

Gemäß einem Ausführungsbeispiel weisen die Spannungen des 48V Spannungsbandes stets einen höheren Betrag auf als die Spannungen des 12V/24V-Spannungsbandes. Beispielsweise weisen die Spannungen des 48V-Spannungsbandes stets einen geringeren Betrag auf als 60V.

Der Betrag einer Spannung, beispielsweise einer Spannung in einem Spannungsband, kann in den obigen Ausführungsbeispielen beispielsweise als Spitzenwert, Durchschnittswert und/oder Effektivwert bestimmt werden. "Stets" kann hier beispielsweise bedeuten, dass das jeweilige Verhältnis der Spannungen zueinander zu jedem Zeitpunkt vorliegt.

Der Lüfter wird insbesondere mit einer Gleichspannung betrieben. Auch kann der Lüfter mit einer Wechselspannung betrieben werden. Durch den Betrieb des zumindest einen Lüfters in einem 48V-Spannungsband, insbesondere mit einer Gleichspannung, kann eine erhöhte Energieeffizienz des Lüfters und/oder eine bessere Regelbarkeit erreicht werden, verglichenen zu einem Betrieb in einem 12V/24V-Spannungsband oder mit Wechselspannung.

Die Transportkältemaschine umfasst ferner einen Spannungswandler.

Der Spannungswandler ist dazu eingerichtet einen Leistungsfluss zwischen dem 12V/24V-Spannungsband an einem 12V/24V-Anschluss (z.B. einem 12V-Anschluss und/oder einem 24V-Anschluss) des Spannungswandlers und dem 48V-Spannungsband an einem 48V-Anschluss des Spannungswandlers zu ermöglichen.

Sowohl das 12V/24V-Spannungsband als auch das 48V-Spannungsband sind jeweils als Gleichspannungsband oder als Wechselspannungsband ausgebildet.

Der Spannungswandler ist insbesondere als ein Gleichspannungsspannungswandler, auch DC/DC-Wandler genannt, ausgeführt. Auch kann der Spannungswandler als Transformator von Wechselspannung zu Wechselspannung und/oder als Wechselrichter für zwei verschiedene Spannungsarten (AC/DC oder DC/AC) geformt sein.

Der Spannungswandler ist insbesondere dazu eingerichtet, einen bidirektionalen elektrischen Leistungsfluss zu ermöglichen. Somit kann einerseits eine Leistung ausgehend von dem 12V/24V-Anschluss in dem 12V/24V-Spannungsband zu dem 48V-Anschluss in dem 48V-Spannungsband mittels des Spannungswandlers übertragen werden. Auch kann andererseits eine Leistung ausgehend von dem 48V-Anschluss in dem 48V-Spannungsband zu dem 12V/24V-Anschluss in dem 12V/24V-Spannungsband übertragen werden. Es ist ferner offenbart, dass der Spannungswandler alternativ lediglich einen unidirektionalen Leistungsfluss in eine der beiden Richtungen erlaubt.

Der Spannungswandler kann beispielsweise zwei Teilmodule umfassen, von denen jeweils eines einen elektrischen Leistungsfluss in einer von zwei entgegengesetzten Leistungsrichtungen zwischen dem 12V/24V-Spannungsband und dem 48V-Spannungsband ermöglicht.

Leistungsflüsse durch den Spannungswandler können steuerbar sein. Beispielsweise kann ein Leistungsfluss durch den Spannungswandler in zumindest eine der beiden oder beide Richtungen auf einen vorgebbaren Leistungswert limitiert, insbesondere vollständig unterbunden, werden. Beispielsweise können Leistungsflüsse in zwei entgegengesetzten Richtungen unabhängig voneinander gesteuert werden.

Der 12V/24V-Anschluss des Spannungswandlers ist mit dem elektrischen Energiespeicher elektrisch verbunden. Die elektrische Verbindungen zwischen Spannungswandler und elektrischem Energiespeicher kann hierbei beispielsweise mittelbar oder unmittelbar gestaltet sein. In einer unmittelbaren Verbindung kann beispielsweise ein elektrischer Leiter, beispielsweise ein Kabel, den 12V/24V-Anschluss des Spannungswandlers mit dem elektrischen Energiespeicher elektrisch verbinden. Eine mittelbare Verbindung kann beispielsweise weitere Komponenten involvieren, welche elektrisch zwischen dem elektrischen Energiespeicher und dem Spannungswandler, insbesondere dessen 12V/24V-Anschluss, angeordnet sind. Beispielsweise können die weiteren Komponenten eine Unterverteilung des Straßennutzfahrzeugs umfassen, einen Regler, ein Steuerelement wie beispielsweise Schalter, eine Sicherung, ein leistungslimitierendes Element, ein Filter, ein Messinstrument und/oder Kombinationen hieraus sein. Die weiteren Komponenten können insbesondere Teil des Straßennutzfahrzeugs und/oder der Transportkältemaschine sein. Auch können weitere Komponenten des Straßennutzfahrzeugs, welche insbesondere nicht Teil der Transportkältemaschine sind, elektrisch zwischen dem elektrischen Energiespeicher und dem Spannungswandler angeordnet sein.

Der 48V-Anschluss des Spannungswandlers ist mit dem zumindest einen Lüfter elektrisch verbunden. Die elektrische Verbindungen zwischen Spannungswandler und Lüfter kann hierbei beispielsweise mittelbar oder unmittelbar gestaltet sein. Bei einer unmittelbaren Verbindung kann beispielsweise ein elektrischer Leiter, beispielsweise ein Kabel, den 48V-Anschluss des Spannungswandlers mit dem Lüfter elektrisch verbinden. Eine mittelbare Verbindung kann beispielsweise weitere Komponenten involvieren, welche elektrisch zwischen dem Lüfter und dem Spannungswandler, insbesondere dessen 48V-Anschluss, angeordnet sind. Diese weiteren Komponenten können beispielsweise eine Unterverteilung der Transportkältemaschine, ein in Serie geschalteter weiterer Lüfter der Transportkältemaschine, ein Regler, ein Steuerelement, ein Schalter, ein Filter, ein Messinstrument, und/oder weitere Komponenten der Transportkältemaschine umfassen. Auch können weitere Komponenten des Straßennutzfahrzeugs, welche insbesondere nicht Teil der Transportkältemaschine sind, elektrisch zwischen dem Spannungswandler und dem Lüfter angeordnet sein.

Es wurde erkannt, dass zumindest eine oder mehrere Komponenten der Transportkältemaschine vorteilhafterweise in einem 48V-Spannungsband betrieben werden. Hierdurch lässt sich die Energieeffizienz der Kältemaschine verglichen mit einem Betrieb in einem 12V/24V-Spannungsband und/oder die Regelbarkeit gegenüber einem Betrieb mit Wechselspannung steigern. Durch den Einsatz höherer Spannungen können die für die elektrische Energieübertragung genutzten Kabelquerschnitte bei gleicher übertragener Energie geringer ausfallen, da geringere Ströme fließen. Insbesondere, wenn Elemente, welche bislang mit dreiphasiger Wechselspannung betrieben wurden, mit 48V Gleichspannung versorgt werden, kann die Regelbarkeit der Komponenten gesteigert werden und Kabel im Hochspannungsbereich können entfallen. Der Wirkungsgrad von Komponenten, welche in einem 48V-Spannungsband betrieben werden, kann zudem höher ausfallen als in einem 12V/24V-Spannungsband oder auch als bei einem Betrieb der jeweiligen Komponenten mit Wechselstrom, insbesondere dreiphasigem Wechselstrom, insbesondere mit Spannungen von 300V bis 600V. Auch wurde erkannt, dass zumindest in einem Betriebsmodus der Transportkältemaschine eine Versorgung aus einem elektrischen Energiespeicher, im Gegensatz zur elektrischen Versorgung aus einer Energiequelle, vorteilhaft ist. Ferner wurde erkannt, dass Bordnetze von Straßennutzfahrzeugen üblicherweise über einen elektrischen Energiespeicher verfügen. Doch werden heutige Bordnetze zumindest teilweise in einem 12V/24V-Spannungsband betrieben. Es wurde erkannt, dass mittels des ohnehin im Bordnetz vorgesehenen elektrischen Energiespeichers im 12V/24V-Spannungsband eine Versorgung von zumindest Teilen der Transportkältemaschine erreicht werden kann. Durch eine bidirektionale Ausführung des Spannungswandlers wird darüber hinaus erreicht, dass der Energiespeicher des Straßennutzfahrzeugs ausgehend von der Energieversorgung von zumindest Teilen der Transportkältemaschine, welche in einem 48V-Spannungsband betrieben werden, aufgeladen werden kann. Auf diese Art und Weise entfällt die Notwendigkeit einer 12V/24V-Energiequelle zur Aufladung des elektrischen Energiespeichers in einem 12V/24V-Spannungsband des Bordnetzes wie beispielsweise ein Generator, welcher den elektrischen Energiespeicher in einem 12V/24V-Spannungsband auflädt. Herkömmlich wird hierfür beispielsweise ein Spannungswandler von dreiphasigem Wechselstrom auf 12V/24V Gleichspannung genutzt, wobei der dreiphasige Wechselstrom beispielsweise aus dem Energieversorgungsnetz oder von dem Dieselgenerator stammte.

Das Straßennutzfahrzeug ist beispielsweise dazu eingerichtet, dass der elektrische Energiespeicher ausschließlich über die Transportkältemaschine, insbesondere mittels des Spannungswandlers mit elektrischer Energie versorgt, insbesondere aufgeladen wird. Hierbei ist der normale Betrieb des Straßennutzfahrzeugs gemeint. Spezielle Manöver wie eine Starthilfe von einem weiteren Fahrzeug oder eine Aufladung des elektrischen Energiespeichers im Winter mit einem externen Ladegerät sind hiervon nicht ausgeschlossen.

Der Spannungswandler kann beispielsweise für Leistungsflüsse von bis zu 100W, 200W, 300W, 400W, 500W, 600W, 700W, 800W, 900W, 1kW oder 1,5kW ausgelegt sein. Auch kann der Spannungswandler für höhere Leistungsflüsse ausgelegt sein. Der Spannungswandler kann gleichhohe maximale Leistungsflüsse in beide Richtungen (12V/24V zu 48V und 48V zu 12V/24V) erlauben. Auch können maximalen Leistungsflüsse der beiden Richtungen unterschiedlich dimensioniert sein. Beispielsweise kann der maximale Leistungsfluss von 12V/24V zu 48V höher sein als der maximale Leistungsfluss von 48V zu 12V/24V oder umgekehrt.

Die Transportkältemaschine kann ferner eine Energiequelle umfassen.

Die Energiequelle kann einen Generator umfassen. Der elektrische Generator ist beispielsweise Teil des Straßennutzfahrzeugs.

Ein Beispiel für einen solchen Generator ist ein Achsgenerator, der durch die Drehung einer Achse des Straßennutzfahrzeugs angetrieben wird und daraus elektrische Energie erzeugt und/oder erzeugen kann, wenn sich das Straßennutzfahrzeug in Fahrt befindet.

Die Energiequelle kann beispielsweise zusätzlich oder alternativ einen Verbrennungsmotor umfassen, beispielsweise einen Diesel- und/oder Benzinmotor. In einem Beispiel kann die Energiequelle als ein Dieselgenerator ausgebildet sein.

In einem weiteren Beispiel kann die Energiequelle beispielsweise zumindest teilweise von einem Verbrennungsmotor des Straßennutzfahrzeugs angetrieben werden, wobei der Verbrennungsmotor insbesondere zumindest unter anderem den mechanischen Vortrieb zum Fahren des Straßennutzfahrzeugs erzeugt. Beispielsweise kann die Energiequelle den Verbrennungsmotor des Straßennutzfahrzeugs und einen elektrischen Generator, beispielsweise eine Lichtmaschine, umfassen.

Der Generator stellt eine Wechselspannung bereit. Die durch den Generator bereitgestellte Wechselspannung ist beispielsweise eine Einphasenwechselspannung oder eine mehrphasige, insbesondere eine dreiphasige Wechselspannung.

Die elektrische Energiequelle kann beispielsweise eine Hochspannungsbatterie umfassen. Die Hochspannungsbatterie kann beispielsweise dazu eingerichtet sein, einen Antriebsstrang des Straßennutzfahrzeugs mit elektrischer Energie zu versorgen. Die Hochspannungsbatterie kann beispielsweise eine Gleichspannung bereitstellen, beispielsweise eine Gleichspannung von zumindest 100V, 200V, 300V, 400V, 500V, 600V, 800V, 1000V, 1,5kV, 2kV oder mehr.

Die Energiequelle kann auch weitere Komponenten umfassen, beispielsweise einen Gleichrichter, Komponenten zur Kompensation von Spannungsschwankungen wie ein Filter (z.B. umfassend Spulen und/oder Kondensatoren und/oder Kombinationen hieraus).

Die Energiequelle ist dazu eingerichtet, zumindest Teile der Transportkältemaschine in einem Normalbetrieb mit elektrischer Energie zu versorgen.

Die Energiequelle kann beispielsweise elektrische Gleichspannung und/oder einphasige oder mehrphasige Wechselspannung bereitstellen. Beispielsweise kann die bereitgestellte Spannung jeweils in einem 48V-Spannungsband liegen. Alternativ oder zusätzlich kann die Energiequelle dazu eingerichtet sein, eine mehrphasige Wechselspannung bereitzustellen, insbesondere dreiphasige Wechselspannung. Insbesondere kann eine dreiphasige Wechselspannung mit einer Spannung in Höhe von 300V bis 540 V (z.B. 400 V) (Effektivwert der verketteten Spannungen) von der elektrischen Energiequelle bereitgestellt werden. Auch kann die elektrische Energiequelle eine Gleichspannung bereitstellen, beispielsweise eine Gleichspannung von zumindest 100V, 200V, 300V, 400V, 500V, 600V, 800V, 1000V, 1,5kV, 2kV oder mehr.

Die Transportkältemaschine kann beispielsweise zumindest eine Komponente aufweisen, welche mit dreiphasiger Wechselspannung betrieben wird. Insbesondere kann die dreiphasige Wechselspannung mit einer Spannung in Höhe von 300V bis 540 V (z.B. 400 V) (Effektivwert der verketteten Spannungen) notwendig sein. Insbesondere kann diese Komponente ein Motor, insbesondere ein Elektromotor, der Transportkältemaschine sein. Der elektrische Motor der Transportkältemaschine kann ein Drehstrommotor sein. Ein Beispiel für einen solchen Drehstrommotor ist ein Drehstrom-Asynchronmotor oder ein Drehstrom-Synchronmotor.

Alternativ oder zusätzlich kann die Transportkältemaschine beispielsweise zumindest eine Komponente aufweisen, welche mit einer Gleichspannung betrieben wird, insbesondere mit einer Gleichspannung in einem 48V-Spannungsband. Dies kann beispielsweise der zumindest eine Lüfter der Transportkältemaschine sein.

Es versteht sich, dass die Transportkältemaschine neben den genannten Komponenten noch weitere Komponenten wie einen Kühlkreis mit beispielsweise einem Verdichter zum Verdichten eines Kühlmittels, einen Kondensator, eine Drosseleinrichtung und einen Wärmetauscher umfassen kann. Wie oben offenbart, kann ein elektrischer Motor einen Verdichter eines solchen Kühlkreises antreiben.

Die Energiequelle ist mittelbar und/oder unmittelbar mit der Transportkältemaschine elektrisch verbunden. Die Energiequelle kann in einer unmittelbaren Verbindung beispielsweise über einen elektrischen Leiter wie beispielsweise ein Kabel mit der Transportkältemaschine verbunden sein. In einer mittelbaren Verbindung kann zwischen der Energiequelle und der Transportkältemaschine zumindest eine weitere Komponente angeordnet sein, beispielsweise ein Schalter, eine Sicherung, ein Messinstrument und/oder Kombinationen hieraus.

Die Energiequelle kann individuell mit einzelnen Komponenten der Transportkältemaschine, beispielsweise einem Motor, Kompressor, Verdampfer, Lüfter und/oder Kombinationen heraus, verbunden sein. Beispielsweise kann die Energiequelle hierbei einzelne Komponenten mit der von ihnen benötigten Spannungsart, insbesondere entweder mit einer dreiphasigen Wechselspannung, insbesondere mit einer Spannung in Höhe von 300V bis 540 V (z.B. 400 V) (Effektivwert der verketteten Spannungen) oder mit einer Gleichspannung, insbesondere in einem 48V-Spannungsband, direkt versorgen.

Auch kann die Energiequelle an einem einzigen Anschluss der Transportkältemaschine angeschlossen sein, insbesondere in einer einzigen Spannungsart, beispielsweise in einer dreiphasigen Wechselspannung. Von dem Anschluss ausgehend können eine oder mehrere, insbesondere alle Komponenten der Transportkältemaschine zumindest zeitweise mit elektrischer Energie versorgt werden. Gegebenenfalls ist die Transportkältemaschine in diesem Fall dazu eingerichtet, eine interne Konvertierung der Spannungsart am Anschluss in zumindest eine andere von zumindest einer Komponente der Transportkältemaschine benötigten Spannungsart umzuwandeln.

Beispielsweise kann die Transportkältemaschine, das Straßennutzfahrzeug, die Energiequelle und/oder der Energieversorgungsanschluss einen weiteren Spannungswandler umfassen. Dies kann beispielsweise ein Spannungswandler von einer Wechselspannung, insbesondere einer dreiphasigen Wechselspannung, insbesondere mit einer Spannung in Höhe von 300V bis 540 V (z.B. 400 V) (Effektivwert der verketteten Spannungen), zu einer Gleichspannung, insbesondere einer Gleichspannung in einem 48V-Spannungsband, sein. Auch können mehrere weitere Spannungswandler vorgesehen sein, beispielsweise um aus anderen Spannungen (Gleich- oder Wechselspannungen) in ein 48V-Spannungsband zu konvertieren.

Der weitere Spannungswandler kann beispielsweise an einer der drei Phasen des dreiphasigen Wechselspannungsanschlusses angeschlossen sein und/oder zwischen zwei Phasen. Auch kann der weitere Spannungswandler an allen drei Phasen angeschlossen sein, beispielsweise in einer Stern- oder Dreiecksschaltung.

Der weitere Spannungswandler kann beispielsweise auf einen Leistungsfluss von bis zu 100W, 200W, 300W, 400W, 500W, 600W, 700W, 800W, 900W, 1kW oder 1,5kW ausgelegt sein. Auch kann der weitere Spannungswandler für höhere Leistungsflüsse ausgelegt sein. Insbesondere kann der weitere Spannungswandler in seinem maximalen Leistungsfluss an den oben genannten Spannungswandler zwischen einem 48V- und einem 12V/24V-Spannungsband angepasst sein. Beispielsweise kann der weitere Spannungswandler für einen für einen im Wesentlichen gleichen (beispielsweise höchstens 5% Abweichung) höheren maximalen Leistungsfluss ausgelegt sein, verglichen mit dem oben genannten Spannungswandler. Hierdurch können sowohl die Verbraucher der Transportkältemaschine mittels des weiteren Spannungswandlers mit elektrischer Energie versorgt werden, als auch das Bordnetz und/oder der elektrische Energiespeicher zu der Maximalleistung des oben eingeführten Spannungswandlers (48V/12V oder 24V/48V) mit elektrischer Energie versorgt werden.

Alternativ oder zusätzlich zu der Energiequelle kann die Transportkältemaschine einen Energieversorgungsanschluss umfassen.

Der Energieversorgungsanschluss kann dazu eingerichtet sein, elektrische Energie zur Versorgung der Transportkältemaschine in einem Normalbetrieb von einer externen elektrischen Energieversorgung zu empfangen.

Der Energieversorgungsanschluss kann insbesondere elektrische Leistung in Form von Gleichspannung, Wechselspannung, insbesondere als eine mehrphasige Wechselspannung empfangen. Insbesondere kann dies eine dreiphasige Wechselspannung sein, insbesondere eine Spannung in Höhe von 300V bis 540 V (z.B. 400 V) (Effektivwert der verketteten Spannungen). Der Energieversorgungsanschluss kann insbesondere in Form einer Steckdose wie einer Drehstromstreckdose (z.B. CEE Drehstromsteckdose) ausgebildet sein.

Zusätzlich oder alternativ kann der Energieversorgungsanschluss als ein für den Automobilbereich gängiger Ladeanschluss, beispielsweise eine Ladebuchse und/oder ein Ladestecker, geformt sein. Beispielsweise kann dies ein als Type 1 J1772, Type 2 Mennekes, CHAdeMo, CCS Combo Type 1, CCS Combo Type 2, GB/T oder Supercharger Ladestecker oder eine dazugehörige Ladebuchse sein. Das Straßennutzfahrzeug und/oder die Transportkältemaschine können Mittel vorsehen, mit derer die von einem derartigen Ladeanschluss bereitgestellten Spannungen in für die Transportkältemaschine notwendigen Spannungsarten umgewandelt werden. Hierfür kann insbesondere zumindest ein Spannungswandler vorgesehen sein, insbesondere ein Wechselrichter.

Die Transportkältemaschine kann folglich ausgehend von dem Energieversorgungsanschluss mit elektrischer Energie versorgt werden. Hierfür empfängt der Energieversorgungsanschluss elektrische Energie von einer externen elektrischen Energieversorgung. Die externe elektrische Energieversorgung kann beispielsweise eine Ladeinfrastruktur, insbesondere eine Ladesäule, sein, ein Energieversorgungsnetz, ein anderes Fahrzeug, ein zum Straßennutzfahrzeug externer Energiespeicher und/oder Kombinationen hieraus.

Die obigen Ausführungen zur Energiequelle, insbesondere deren Verbindung mit der Transportkältemaschine, gelten gleichermaßen für den Energieversorgungsanschluss.

Unter dem Normalbetrieb ist insbesondere ein Betrieb der Transportkältemaschine zu verstehen, in welchem die Transportkältemaschine dauerhaft betrieben wird, um insbesondere einen Innenraum, insbesondere einen Laderaum, des Straßennutzfahrzeugs zu temperieren, insbesondere zu heizen und/oder zu kühlen. Ein Normalbetrieb liegt unter anderem beispielsweise dann vor, wenn das Straßennutzfahrzeug Waren transportiert, welche eine Temperierung, insbesondere Kühlung, durch die Transportkältemaschine benötigen. Der Normalbetrieb kann beispielsweise über lange Zeiträume, beispielsweise eine oder mehrere Stunden oder auch Tage, aufrechterhalten werden. Die Transportkältemaschine kann während des Normalbetriebs in ihrer Leistungsaufnahme variieren. Beispielsweise können Phasen von dem Normalbetrieb umfasst sein, in welchem die Transportkältemaschine die Leistung von kälteerzeugenden Komponenten wie einem Motor, einem Kompressor und/oder einem Verdampfer, herunterregelt. Beispielsweise kann dies begründet sein durch eine Temperatur des zu temperierenden Innenraums des Straßennutzfahrzeugs, welche sich nahe an einer Soll-Temperatur befindet oder auch einer verringerten Außentemperatur, die ein verringertes Eindringen von Wärme in den Innenraum mit sich bringt. Gleichwohl kann die Transportkältemaschine im Normalbetrieb Leistungen aufnehmen, welche sich beispielsweise nahe an der maximalen Leistungsaufnahme der Transportkältemaschine befinden. Der Normalbetrieb umfasst demnach insbesondere eine fortlaufenden, durchgängigen Betrieb der Transportkältemaschine, welcher insbesondere dazu eingerichtet ist, eine Soll-Temperatur innerhalb eines zu temperierenden Innenraums des Straßennutzfahrzeugs zu erreichen und zu halten. Im Normalbetrieb wird die Transportkältemaschine insbesondere von der Energiequelle und/oder über den Energieversorgungsanschluss versorgt. Insbesondere wird die Transportkältemaschine im Normalbetrieb nicht mit elektrischer Energie aus dem elektrischen Energiespeicher versorgt.

Als kälteerzeugende Komponenten sollen vorliegend zumindest einige der Komponenten der Transportkältemaschine verstanden werden, welche zu dem Kühlkreis der Transportkältemaschine zählen. Insbesondere können die kälteerzeugenden Komponenten einen Motor umfassen. Der Kühlkreis wird insbesondere von einem solchen Motor angetrieben und kann darüber hinaus einen Verdichter, einen Kondensator, eine Drosseleinrichtung, einen Wärmetauscher, einen Verdampfer und/oder Kombinationen hieraus umfassen. Von den kälteerzeugenden Komponenten nicht umfasst sind insbesondere Sensoren, insbesondere Temperatursensoren, sowie Lüfter. Auch kann von den kälteerzeugenden Komponenten der Transportkältemaschine in Einzahl gesprochen werden. Von einer kälteerzeugenden Komponente sind beliebige Kombinationen der hierüber aufgeführten Einzelkomponenten einer Transportkältemaschine umfasst, welche, insbesondere direkt, zur Kühlwirkung der Transportkältemaschine beitragen.

Die elektrische Leistungsaufnahme der Transportkältemaschine im Normalbetrieb kann beispielsweise zumindest phasenweise und/oder im zeitlichen Durchschnitt zumindest 10kW, 20kW, 30kW, 40kW oder 50kW erreichen. In einem Normalbetrieb wird üblicherweise der Großteil der von der Transportkältemaschine aufgenommenen Leistung von zumindest einer der kälteerzeugenden Komponenten aufgenommen.

Im Normalbetrieb wird die Transportkältemaschine beispielsweise ausschließlich aus der Energiequelle und/oder über den Energieversorgungsanschluss mit elektrischer Energie versorgt. Insbesondere wird die Transportkältemaschine im Normalbetrieb nicht mit elektrischer Energie aus dem elektrischen Energiespeicher versorgt.

Es wurde erkannt, dass die Transportkältemaschine neben dem Normalbetrieb weitere Betriebsmodi aufweist. Diese können sich vom Normalbetrieb insbesondere durch die elektrische Leistungsaufnahme der Transportkältemaschine unterscheiden.

Die offenbarte Transportkältemaschine kann neben dem Normalbetrieb auch in einem Lüfterbetrieb betrieben werden.

In einem Lüfterbetrieb können zum Beispiel insbesondere die temperaturerzeugenden, insbesondere kälteerzeugenden Komponenten der Transportkältemaschine, beispielsweise Motor, Pumpe, Kompressor, Verdampfer und/oder Kombinationen hieraus, ganz oder teilweise inaktiv sein.

Wenn eine Komponente inaktiv ist, wird diese insbesondere im Wesentlichen nicht mit elektrischer Energie versorgt. Beispielsweise kann die Komponente mit überhaupt keiner elektrischen Energie mehr versorgt werden. Auch kann beispielsweise ein Betriebsmodus der Komponente existieren, in dem diese nur mit sehr wenig elektrischer Energie versorgt wird, insbesondere verglichen mit ihrem normalen Energieverbrauch in einem aktiven, von dem inaktiven verschiedenen, Betriebsmodus der Komponente. Im inaktiven Betriebsmodus wandelt die Komponente insbesondere keine elektrische Energie in eine andere Energieform um. Beispielsweise erzeugt die Komponente keine Wärme, keine Bewegung, keine Strahlung und erzeugt keine potentielle Energie. Beispiele für inaktive Komponenten sind ein nicht angetriebener Lüfter, welcher insbesondere keinen Luftstrom verursacht, ein Motor, der kein Drehmoment über seine Welle bereitstellt, ein Kompressor, der nichts komprimiert, ein Energiespeicher, der nicht aufgeladen wird, und eine Lampe, die nicht leuchtet.

Wenn eine Komponente aktiv ist, wird diese mit elektrischer Energie versorgt. Insbesondere wandelt die aktive Komponente elektrische Energie in eine andere Energieform um, beispielsweise in Wärme, Bewegung, Strahlung oder potentielle Energie. Beispiele für aktive Komponenten sind ein Lüfter, welcher einen Luftstrom verursacht, ein Motor, der ein Drehmoment über seine Welle bereitstellt, ein Kompressor, der etwas, beispielsweise ein Gas, komprimiert, ein Energiespeicher, der aufgeladen wird, und eine Lampe, die leuchtet.

Die Transportkältemaschine ist im Lüfterbetrieb allerdings nicht vollständig ausgeschaltet. Stattdessen werden zumindest eine oder einige ihrer Komponenten weiterhin mit elektrischer Energie versorgt. Beispielsweise kann zumindest eine nicht-kälteerzeugende Komponente der Transportkältemaschine, insbesondere der zumindest eine Lüfter, im Lüfterbetrieb aktiv sein. Diese im Lüfterbetrieb aktive(n) Komponente(n) muss/müssen mit elektrischer Energie versorgt werden. Insbesondere kann vorgesehen sein, dass der zumindest eineLüfter der Transportkältemaschine im Lüfterbetrieb mit elektrischer Energie versorgt wird.

Dadurch, dass zumindest eine oder einige Komponenten der Transportkältemaschine im Lüfterbetrieb aktiv sind, können Komponenten der Transportkältemaschine vor Überhitzung bewahrt werden. Auch kann beispielsweise eine verbleibende Restleistung der temperaturerzeugenden Komponenten genutzt werden und/oder eine Zirkulation der Luft in dem zu temperierenden Innenraum des Straßennutzfahrzeugs aufrechterhalten werden. Hierdurch kann u.U. die Temperatur eines temperierten Innenraums des Straßennutzfahrzeugs verglichen mit einer vollständigen Abschaltung der Transportkältemaschine länger nahe an der Soll-Temperatur gehalten werden.

Das Straßennutzfahrzeug ist dazu eingerichtet, in einem Lüfterbetrieb den zumindest einen Lüfter der Transportkältemaschine aus dem elektrischen Energiespeicher mittels des Spannungswandlers mit elektrischer Energie zu versorgen. Auch können zwei oder mehr Lüfter und/oder weitere Komponenten der Transportkältemaschine aus dem elektrischen Energiespeicher mit elektrischer Energie versorgt werden.

Der Spannungswandler wandelt in diesem Fall die von dem elektrischen Energiespeicher in einem 12V/24V-Spannungsband bereitgestellte Energie in ein 48V-Spannungsband um. Auf diese Weise wird es möglich, den in einem 48V-Spannungsband betriebenen Lüfter der Transportkältemaschine aus dem elektrischen Energiespeicher mit elektrischer Energie zu versorgen.

Die Leistungsaufnahme der Transportkältemaschine im Lüfterbetrieb kann geringer sein als im Normalbetrieb. Beispielsweise kann die Leistungsaufnahme im Lüfterbetrieb bis zu 10W, 50W, 100W, 500W, 1kW oder 1,5kW betragen.

Die aufgenommene Leistung der üblicherweise verwendeten Energiequelle, beispielsweise eines Generators, insbesondere wenn dieser von einem Verbrennungsmotor angetrieben wird, beispielsweise von einem Dieselmotor, kann nicht beliebig geringe Werte annehmen. Dies gilt auch bei beliebig geringer von der Energiequelle, insbesondere von dem Generator, bereitgestellter elektrischer Leistung. Oft produziert diese die unverändert hohe Leistung, welche für den Normalbetrieb der Transportkältemaschine notwendig wäre. Im Lüfterbetrieb ergibt sich somit ein Missverhältnis zwischen aufgenommener bzw. verbrauchter chemischer Energie (aus dem Treibstoff, beispielsweise Diesel) pro Zeiteinheit und bereitgestellter elektrischer Leistung. Die offenbarte Lösung ermöglicht die den Betrieb der Transportkältemaschine im Lüfterbetrieb bei deaktivierter Energiequelle und deaktiviertem Energieversorgungsanschluss. Dies gelingt durch die Versorgung zumindest eines der Lüfter der Transportkältemaschine durch den elektrischen Energiespeicher des Straßennutzfahrzeugs. Neben einer gesteigerten Energieeffizienz ergibt sich somit auch eine reduzierte Lärmbelästigung durch das Straßennutzfahrzeug.

Der Lüfterbetrieb kann zeitlich begrenzt sein. Beispielsweise kann der Lüfterbetrieb auf eine Zeit von bis zu 1min, 2min, 5min, 10min, 15min, 20min, 30min, 45min, 1h, 2h, 3h, 5h oder 10h begrenzt sein.

Gemäß einem Ausführungsbeispiel kann die Transportkältemaschine neben dem Normalbetrieb und dem Lüfterbetrieb auch in einem ausgeschalteten Betrieb betrieben werden.

In dem ausgeschalteten Betrieb der Transportkältemaschine kann diese beispielsweise im Wesentlichen vollständig ausgeschaltet sein. Im Wesentlichen kann hierbei bedeuten, dass beispielsweise noch zumindest eine Komponente, beispielsweise ein Messelement, beispielsweise ein Sensor, insbesondere ein Temperatursensor, zumindest ein Anzeigeelement, beispielsweise eine Signalleuchte, ein Steuerelement, beispielsweise ein elektronischer Schalter, und/oder Kombinationen hieraus mit elektrischer Energie versorgt wird. Der Großteil und/oder alle Komponenten mit einer relevanten Leistungsaufnahme von beispielsweise zumindest 10W, oder 100W, sind jedoch ausgeschaltet, wenn die Transportkältemaschine im Wesentlichen ausgeschaltet ist. Die Transportkältemaschine kann folglich im ausgeschalteten Betrieb noch eine geringe elektrische Leistung, welche beispielsweise bis zu 1W, 10W oder 100W beträgt, aufnehmen. Auch können im ausgeschalteten Betrieb der Transportkältemaschine all ihre Komponenten ausgeschaltet sein, sodass ihre Leistungsaufnahme auf 0W oder höchstens 500mW, 1W oder 5W sinkt. Insbesondere kann zumindest einer der Lüfter, insbesondere alle Lüfter, der Transportkältemaschine im ausgeschalteten Betrieb ausgeschaltet sein.

Das Straßennutzfahrzeug und/oder die Transportkältemaschine kann beispielsweise dazu eingerichtet sein, dass die Transportkältemaschine zeitlich nach dem Normalbetrieb, insbesondere unmittelbar nach dem Normalbetrieb, in den Lüfterbetrieb übergeht. Alternativ oder zusätzlich kann das Straßennutzfahrzeug und/oder die Transportkältemaschine beispielsweise dazu eingerichtet sein, dass die Transportkältemaschine zeitlich nach dem Lüfterbetrieb, insbesondere unmittelbar nach dem Lüfterbetrieb, in den ausgeschalteten Betrieb übergeht. Zeitlich nach dem Lüfterbetrieb, insbesondere unmittelbar nach dem Lüfterbetrieb, kann die Transportkältemaschine auch in den Normalbetrieb übergehen.

Beispielsweise kann das Straßennutzfahrzeug und/oder die Transportkältemaschine dazu eingerichtet sein, dass die Transportkältemaschine basierend auf einer Temperatur eines des zu temperierten Innenraums des Straßennutzfahrzeugs von dem Lüfterbetrieb in den Normalbetrieb und/oder in den ausgeschalteten Betrieb und/oder von dem Normalbetrieb in den Lüfterbetrieb umschaltet.

Beispielsweise kann eine Anschalttemperatur vorbestimmt werden, bei deren Erreichen und/oder Überschreiten in den Normalbetrieb gewechselt wird. Bei einem zu kühlenden Innenraum kann die Anschalttemperatur beispielsweise bis zu 1°C, 2°C, 3°C, 4°C, 5°C, 7°C oder 10°C oberhalb einer Solltemperatur liegen. Beispielsweise kann für eine Soll-Temperatur von beispielhaften 8°C eine Anschalttemperatur um 5°C höher liegen, also bei 13°C. Bei Erreichen und/oder Überschreiten der Anschalttemperatur geht die offenbarte Transportkältemaschine in den Normalbetrieb über, insbesondere aus dem Lüfterbetrieb.

Zeitlich nach dem Normalbetrieb, insbesondere im Wesentlichen unmittelbar nach dem Normalbetrieb, kann die Transportkältemaschine erneut in den Lüfterbetrieb übergehen.

Der Lüfterbetrieb kann beispielsweise mit dem Normalbetrieb abwechseln. Die Transportkältemaschine kann somit derart eingerichtet sein, dass sie zwischen dem Lüfterbetrieb und dem Normalbetrieb hin und her schaltet und/oder geschaltet wird.

Beispielsweise kann das Straßennutzfahrzeug und/oder die Transportkältemaschine dazu eingerichtet sein, dass die Transportkältemaschine, wenn eine vorbestimmte Abschalttemperatur eines zu temperierenden Innenraums des Straßennutzfahrzeugs erreicht ist, von dem Normalbetrieb in den Lüfterbetrieb umschaltet. Die Abschalttemperatur kann hierbei bei einem zu kühlenden Innenraum des Straßennutzfahrzeugs unterhalb der Solltemperatur des zu kühlenden Innenraums liegen. Beispielsweise kann die Abschalttemperatur um zumindest 1°C, 2°C, 3°C, 5°C oder 10°C unterhalb der Soll-Temperatur liegen. Beispielsweise kann für eine Soll-Temperatur von beispielhaften 8°C eine Abschalttemperatur um 5°C niedriger liegen, also bei 3°C. Bei Erreichen und/oder Unterschreiten der Anschalttemperatur geht die offenbarte Transportkältemaschine in den Lüfterbetrieb über.

Die Abweichungen der Anschalttemperatur von der Soll-Temperatur kann größer oder kleiner als die oder gleich der Abweichung der Abschalttemperatur von der Soll-Temperatur sein.

Auch kann das Straßennutzfahrzeug und/oder die Transportkältemaschine dazu eingerichtet sein, dass die Transportkältemaschine von dem Normalbetrieb in den Lüfterbetrieb umschaltet, wenn die Energiequelle von einem eingeschalteten in einen ausgeschalteten Modus wechselt. Dies kann beispielsweise dann eintreten, wenn die Energiequelle auf einem Generator basiert, welcher nicht mehr angetrieben wird. Beispielsweise kann der Generator zumindest teilweise von einem Motor, insbesondere dem Verbrennungsmotor, insbesondere des Straßennutzfahrzeugs angetrieben werden. Wenn der Motor abgestellt wird, wird der Generator inaktiv. Dies kann beispielsweise bei (beispielsweise manueller) Abschaltung des Verbrennungsmotors, einer Leerung eines Tanks des Verbrennungsmotors, einem Motorfehler und/oder Kombinationen hieraus der Fall sein. Dies kann beispielsweise bei einem Abstellen des Straßennutzfahrzeugs oder bei Eingreifen einer Start-Stopp-Automatik, bei der der Motor automatisch bei Stillstand des Straßennutzfahrzeugs ausgeschaltet wird, eintreten. Falls die Energiequelle ein Achsgenerator ist, kann ein Stillstand des Fahrzeugs einen Lüfterbetrieb auslösen. Auch kann ein Trennen des Energieversorgungsanschlusses einen Übergang in den Lüfterbetrieb, ausgehend vom Normalbetrieb auslösen.

Die Transportkältemaschine kann von dem Lüfterbetrieb und/oder dem ausgeschalteten Betrieb in den Normalbetrieb wechseln, wenn die Energiequelle von einem ausgeschalteten in einen eingeschalteten Modus wechselt.

In dem Lüfterbetrieb wird die Transportkältemaschine beispielsweise weder aus der Energiequelle noch über den Energieversorgungsanschluss mit elektrischer Energie versorgt. Zum Beispiel wird die Transportkältemaschine im Lüfterbetrieb ausschließlich mit elektrischer Energie aus dem elektrischen Energiespeicher versorgt. Die elektrische Energie wird hierbei mittels des Spannungswandlers aus dem 12V/24V-Spannungsband des elektrischen Energiespeichers in das 48V-Spannungsband des zumindest einen Lüfters, welcher im Lüfterbetrieb weiterbetrieben wird, umgewandelt.

Hierdurch entfällt die Notwendigkeit, die Energiequelle, welche für eine hohe Leistungsabgabe eingerichtet ist, im Lüfterbetrieb allein für Verbraucher verhältnismäßig geringer Leistungen wie insbesondere die Lüfter weiter zu betreiben. Das Straßennutzfahrzeug kann somit energieeffizienter und leiser betrieben werden, insbesondere schon kurz nach dem Normalbetrieb.

Gemäß einem Ausführungsbeispiel ist das Straßennutzfahrzeug dazu eingerichtet, im Normalbetrieb den elektrischen Energiespeicher mittels des Spannungswandlers mit elektrischer Energie zu versorgen, insbesondere aufzuladen.

Der Spannungswandler kann in diesem Fall elektrisch Energie ausgehend von seinem 48V-Anschluss zu seinem 12V/24V-Anschluss übertragen. Aufseiten des 48V-Anschlusses kann der Spannungswandler hierfür ausgehend von der Energiequelle und/oder dem Energieversorgungsanschluss mit elektrischer Energie versorgt werden.

Beispielsweise kann auf diese Art und Weise der elektrische Energiespeicher von der Energiequelle geladen werden. Dies kann beispielsweise vorteilhaft sein, wenn die Energiequelle mehr elektrische Leistung liefert und/oder liefern kann, als von der Transportkältemaschine aufgenommen wird. Beispielsweise kann die Energiequelle einen Generator, beispielsweise auf Basis eines Verbrennungsmotors des Straßennutzfahrzeugs, umfassen. Der Generator kann beispielsweise unabhängig von dem Leistungsbedarf der Transportkältemaschine betrieben werden, insbesondere an einem optimalen Arbeitspunkt. Der optimale Arbeitspunkt kann sich beispielsweise über die Drehzahl eines den Generator antreibenden Motors bestimmen. Wird nun mehr Leistung von dem Generator produziert, als die Transportkältemaschine zum Temperieren aufnimmt, kann die überschüssige Leistung in dem elektrischen Energiespeicher zwischengespeichert werden und/oder von Verbrauchern im 12V/24V-Spannungsband genutzt werden.

Dadurch, dass der elektrische Energiespeicher ausgehend von der Energiequelle und/oder dem Energieversorgungsanschluss der Transportkältemaschine geladen werden kann, entfällt die Notwendigkeit, eine separate Lademöglichkeit für den elektrischen Energiespeicher zu schaffen. So kann insbesondere auf einen Generator, womöglich umfassend einen Gleichrichter oder weitere Komponenten, für ein 12V/24V-Spannungsband verzichtet werden. Insbesondere kann ein Spannungswandler, welcher für die Umwandlung von dreiphasigem Wechselstrom (beispielsweise mit Effektivwert der verketteten Spannungen von 400V) auf 12V/24V Gleichspannung eingerichtet ist, entfallen.

Das Straßennutzfahrzeug, die Transportkältemaschine und/oder der Spannungswandler kann beispielsweise dazu eingerichtet sein, im Normalbetrieb ausschließlich einen Leistungsfluss ausgehend von dem 48V-Anschluss zu dem 12V/24V-Anschluss des Spannungswandlers zu erlauben.

Das Straßennutzfahrzeug, die Transportkältemaschine und/oder der Spannungswandler kann beispielsweise dazu eingerichtet sein, den Aufladevorgang des elektrischen Energiespeichers zu steuern. Beispielsweise kann eine Ladeleistung für den elektrischen Energiespeicher vorgebbar sein, insbesondere an dem Spannungswandler. Beispielsweise kann die Ladeleistung des elektrischen Energiespeichers über den Spannungswandler auf eine vorgegebenen Höchstwert limitiert sein. Beispielsweise kann der Höchstwert abhängig sein von einer Leistung der Energiequelle und/oder des Energieversorgungsanschlusses und/oder der Transportkältemaschine.

Das Straßennutzfahrzeug, die Transportkältemaschine und/oder der Spannungswandler kann beispielsweise dazu eingerichtet sein, den Leistungsbezug aus dem elektrischen Energiespeicher zu steuern. Beispielsweise kann die bezogene elektrische Leistung aus dem elektrischen Energiespeicher auf einen vorgebbaren Höchstwert limitiert sein. Insbesondere kann der Höchstwert abhängig von dem Ladezustand des elektrischen Energiespeichers sein. Insbesondere kann der Höchstwert der zu beziehenden elektrischen Leistung mit dem Ladezustand positiv korreliert und/oder monoton fallend konfiguriert sein. Auch kann beispielsweise bei Unterschreitung eines vorgebbaren Ladezustands des elektrischen Energiespeichers ein Leistungsbezug aus dem elektrischen Energiespeicher unterbunden werden.

Gemäß einem Ausführungsbeispiel ist
- das Straßennutzfahrzeug und/oder die Transportkältemaschine dazu eingerichtet, im Lüfterbetrieb eine kälteerzeugende Komponente der Transportkältemaschine zu deaktivieren.

Eine deaktivierte Komponente ist insbesondere inaktiv und/ oder ausgeschaltet.

Beispielsweise kann ein Schalter in der Stromversorgung kälteerzeugenden Komponenten einen Leistungsfluss zu zumindest einer oder mehr kälteerzeugenden Komponenten unterbinden. Auch kann zumindest eine oder mehrere der kälteerzeugenden Komponenten steuerbar und insbesondere abschaltbar sein.

Gemäß einem Ausführungsbeispiel ist
- die Energiequelle ein Generator, insbesondere ein mit einem Brennstoff, insbesondere einem fossilen Brennstoff, betriebener Generator, insbesondere ein Dieselgenerator und/oder
- der Energieversorgungsanschluss umfasst eine Ladebuchse, insbesondere für eine Ladeinfrastruktur.

Der Energieversorgungsanschluss kann insbesondere eine Ladebuchse umfassen. Von dem Begriff Ladebuchse ist auch ein Ladestecker eingeschlossen. Die Ladebuchse kann insbesondere eine für den Automobilbereich gängige Ladebuchse sein. Beispielsweise kann die Ladebuchse an die Geometrie in einer Ladestation angepasst sein (beispielsweise als Type 1 J1772, Type 2 Mennekes, CHAdeMo, CCS Combo Type 1, CCS Combo Type 2, GB/T oder Supercharger) und/oder einen regulären Stromstecker (beispielsweise ein CEE Stecker).

Gemäß einem Ausführungsbeispiel ist
- der zumindest eine Lüfter dazu eingerichtet,
   (i) temperierte Luft von der Transportkältemaschine in einen Innenraum des Straßennutzfahrzeugs zu transportieren und/oder
   (ii)Außenluft in die Transportkältemaschine zu transportieren und/oder
   (iii) zumindest einen Teil der Transportkältemaschine zu lüften, insbesondere zu kühlen.

Wenn ein Lüfter eine Komponente, insbesondere einen Teil der Transportkältemaschine lüftet, kann damit insbesondere gemeint sein, dass der Lüfter eine Luftbewegung an der gelüfteten Komponente verursacht. Beispielsweise kann ein Luftstrom, welcher von dem Lüfter versursacht wird, zu der Komponente oder davon weg führen.

Wenn ein Lüfter eine Komponente, insbesondere einen Teil der Transportkältemaschine, kühlt, kann damit insbesondere gemeint sein, dass der die Komponente lüftet und dabei Wärme durch Konvektion von der Komponente abtransportiert. Beispielsweise kann ein von dem Lüfter verursachter Luftstrom, welcher von der Komponente wegführt, Wärme von der Komponente aufnehmen und ausgehend von der Komponente in einen von der Komponente beabstandeten Bereich transportieren.

Ein Lüfter kann auch mehrere der genannten Funktionen übernehmen. Auch kann für eine jeweilige Funktion jeweils ein Lüfter vorgesehen sein. Eine einzelne Funktion kann auch von zwei oder mehr Lüfter erfüllt werden.

Die Lüfter der Transportkältemaschine können unabhängig voneinander steuerbar, insbesondere an- und abschaltbar und/oder in ihrer Lüftintensität (z.B. Drehzahl) regelbar, sein. Beispielsweise kann eine Untermenge von Lüfter angeschaltet sein, während die restlichen Lüfter abgeschaltet sind.

Im Normalbetrieb können insbesondere alle Lüfter der Transportkältemaschine aktiv sein. Wenn ein Lüfter aktiv ist, wandelt dieser elektrische Energie in eine Luftströmung um.

Im Lüfterbetrieb kann beispielsweise nur eine Untermenge der Lüfter der Transportkältemaschine angeschaltet sein. Beispielsweise kann zumindest einer der zumindest einen Lüfter, welcher einen Teil der Transportkältemaschine lüftet, insbesondere kühlt, aktiv sein. Alternativ oder zusätzlich kann zumindest einer der zumindest einen Lüfter, welcher dazu eingerichtet ist, temperierte Luft von der Kältemaschine in einen Innenraum des Straßennutzfahrzeugs zu transportieren, im Lüfterbetrieb angeschaltet sein. Alternativ oder zusätzlich kann zumindest einer der zumindest einen Lüfter, welche dazu eingerichtet ist Außenluft in die Transportkältemaschine zu transportieren, im Lüfterbetrieb angeschaltet sein.

Wenn eine oder mehrere der Lüfter im Lüfterbetrieb angeschaltet sind, werden diese aus dem elektrischen Energiespeicher mittels des Spannungswandlers mit elektrischer Energie versorgt.

Gemäß einem Ausführungsbeispiel umfasst die Transportkältemaschine in einem Luftansaugbereich der Transportkältemaschine zumindest einen Temperatursensor, wobei der Temperatursensor insbesondere unterhalb von einem Luftausblasbereich der Transportkältemaschine angeordnet ist.

Das Straßennutzfahrzeug und/oder die Transportkältemaschine weist insbesondere einen Luftansaugbereich auf. In dem Luftansaugbereich befindet sich beispielsweise eine Ansaugöffnung eines Ansaugkanals, welche sich in einen zu temperierenden Innenraum des Straßennutzfahrzeugs öffnet. Luft aus dem zu temperierenden Innenbereich kann durch den Luftansaugbereich angesaugt werden. Von dort wird die Luft in Richtung der temperierenden, insbesondere kälteerzeugenden, Komponenten der Transportkältemaschine transportiert.

Um die Temperatur im zu temperierenden Innenraum messen zu können, ist ein Temperatursensor in dem Luftansaugbereich vorgesehen. Der Temperatursensor kann beispielsweise als Positive Temperature Coefficient (PTC), Negative Temperature Coefficient (NTC) Widerstandssensor, als Halbleiter-Temperatursensor, als Platin-Messwiderstand, Bimetallschalter, eine Infrarotmesseinrichtung und/oder Kombinationen heraus ausgeführt sein.

Das Straßennutzfahrzeug und/oder die Transportkältemaschine weist eine Luftausblasbereich auf. In dem Luftausblasbereich befindet sich eine Auslassöffnung, aus der temperierte Luft ausgehend von der Transportkältemaschine in den zu temperierenden, insbesondere zu kühlenden, Innenraum (bspw. Laderaum) des Straßennutzfahrzeugs ausgegeben werden kann.

Üblicherweise ist der Luftausblasbereich oberhalb von dem Luftansaugbereich angeordnet. Hiermit ist insbesondere gemeint, dass der Luftansaugbereich näher an demZentrum eines Planeten, auf welchem sich das Straßennutzfahrzeug befindet, angeordnet ist, als der Luftausblasbereich. Auf diese Art und Weise kann die von der Transportkältemaschine ausgehende Luft in dem zu temperierenden Innenraum des Straßennutzfahrzeugs, insbesondere im Falle von gekühlter Luft, von oben herab absinken.

Der Luftfluss durch die Transportkältemaschine, ausgehend von dem Luftansaugbereich zu dem Luftausblasbereich wird beispielsweise von zumindest einem oder von mehreren Lüftern der Transportkältemaschine ermöglicht.

Wenn die Transportkältemaschine nach einem kühlenden Betrieb abgeschaltet wird, ohne zumindest einen der Lüfter, welcher den Luftfluss durch die Kältemaschine aufrechterhält, angeschaltet zu lassen, strömt die gekühlte Luft in Richtung der Schwerkraft nach unten. Die Folge ist eine Fehlmessung des Temperatursensors im Luftansaugbereich. Dieser misst nun nicht mehr die Temperatur der angesaugten Innenluft des zu temperierenden Innenraums des Straßennutzfahrzeugs, sondern die aus der Transportkältemaschine stammende temperierte, insbesondere gekühlte, in Richtung Schwerkraft fallende Luft.

Ein im Lüfterbetrieb weiterhin aktiver Lüfter umgeht dieses Problem, indem der Luftfluss durch die Transportkältemaschine und insbesondere ausgehend von dem zu temperierenden Innenraum der Transportkältemaschine durch den Luftansaugbereich aufrechterhalten werden kann.

Gemäß einem Ausführungsbeispiel ist der elektrische Energiespeicher dazu eingerichtet, ein Bordnetz, insbesondere ein Trailerbordnetz, des Straßennutzfahrzeugs mit elektrischer Energie zu versorgen, wobei das Bordnetz insbesondere in einem 12V/24V-Spannungsband betrieben wird. Ein Trailerbordnetz ist hierbei insbesondere ein elektrisches Netz eines Trailers. Ein Trailer ist hierbei ein Anhänger eines Straßennutzfahrzeugs.

Dadurch, dass der elektrische Energiespeicher in einem 12V/24V-Spannungsband in ein Bordnetz eingebunden ist, kann dieser in einem herkömmlichen Straßennutzfahrzeug bereits vorausgesetzt werden. Das offenbarte Straßennutzfahrzeug erfordert somit relativ zum üblichen elektrischen Aufbau von Straßennutzfahrzeugen mit Transportkältemaschinen keine tiefgreifenden Anpassungen. Insbesondere wurde erkannt, dass der zumindest eine Lüfter, welcher im Lüfterbetrieb angeschaltet bleibt, eine ausreichend niedrige elektrische Leistungsaufnahme aufweist, um von einem elektrischen Energiespeicher des Bordnetzes versorgt zu werden.

Ein Lüfter kann beispielsweise ein Leistungsaufnahme unterhalb von 100W, 200W, 300W, 400W, 500W, 600W, 700W, 800W, 900W, 1kW 1,5kW, 2kW, 3kW oder 4kW aufweisen. Die Leistungsaufnahme kann einstellbar sein. Beispielsweise kann der Lüfter dazu eingerichtet sein, im Normalbetrieb eine höhere Leistung (beispielsweise im Bereich 600W - 2kW) aufzunehmen als im Lüfterbetrieb (beispielsweise im Bereich 50W - 500W). Die Leistungsaufnahme kann beispielsweise durch eine geeignete Steuerung einstellbar sein. Beispielsweise kann die Steuerung dazu eingerichtet sein, die Dauer, während der ein gegebener Lüfter mit Energie aus dem Energiespeicher betrieben werden kann, zu maximieren. Eine Steuerungsvorrichtung kann beispielsweise dazu eingerichtet sein, die Leistungsaufnahme eines Lüfter zu steuern, beispielsweise mittels einer Pulsweitenmodulation (PWM), mittels einer analogen Spannung und/oder mittels eines digitalen Bus-Systems wie beispielsweise einem Controller Area Network (CAN) Bus, einem Local Interconnect Network (LIN) Bus, einer RS232oder RS485 Schnittstelle und/oder Kombinationen hieraus.

Gemäß einem Ausführungsbeispiel umfasst das offenbarte Straßennutzfahrzeug zumindest einen Anhänger für Straßennutzfahrzeuge. Der elektrische Energiespeicher ist beispielsweise in dem Anhänger für Straßennutzfahrzeuge angeordnet.

Der elektrische Energiespeicher kann auch in einem anderen Teil des Straßennutzfahrzeugs als dem Anhänger angeordnet sein. Beispielsweise kann der elektrische Energiespeicher in einer Zugmaschine, welche beispielsweise mit dem Anhänger gekoppelt ist, angeordnet sein.

Gemäß einem Ausführungsbeispiel umfasst das Straßennutzfahrzeug, insbesondere die Transportkältemaschine, eine Steuerungseinrichtung, wobei die Steuerungseinrichtung insbesondere dazu eingerichtet ist, zumindest einen der zumindest einen Lüfter zu steuern, insbesondere im Lüfterbetrieb.

Die Steuerungseinrichtung kann beispielsweise eine Recheneinrichtung umfassen, beispielsweise einen Mikrocontroller, einen applikationsspezifischen integrierten Schaltkreis (ASIC), eine analoge Steuerungsschaltung und/oder Kombinationen heraus.

Die Steuerungseinrichtung kann insbesondere derart eingerichtet sein, dass sie den zumindest einen Lüfter der Transportkältemaschine steuern kann. Insbesondere kann die Steuerungseinrichtung eingerichtet sein, zumindest einen der zumindest einen Lüfter einzuschalten, auszuschalten und/oder in seiner Lüftintensität und/oder seiner Drehzahl und/oder seiner elektrischen Leistung zu regulieren.

Die Steuerungseinrichtung kann ferner dazu eingerichtet sein, zumindest eine weitere Komponente der Transportkältemaschine, insbesondere eine kälteerzeugende Komponente zu steuern, insbesondere einzuschalten, auszuschalten und oder in ihrer Kühlleistung zu regulieren.

Die Steuerungseinrichtung kann auch dazu eingerichtet sein, zumindest einen der zumindest einen Lüfter zu steuern und keine andere Komponente der Transportkältemaschine zu steuern. Die Steuerungseinrichtung kann also beispielsweise dazu eingerichtet sein, nur zumindest einen der zumindest einen Lüfter zu steuern, insbesondere nur einen einzigen Lüfter. Andere Komponenten der Transportkältemaschine können in diesem Falle von anderen Steuerungskomponenten gesteuert werden. Die Steuerung der Transportkältemaschine kann beispielsweise modular aufgebaut sein. Hierbei kann die Steuerungseinrichtung für die Lüftersteuerung eingerichtet sein und von anderen Steuerungskomponenten über eine geeignete Schnittstelle Steuerbefehle erhalten, welche beispielsweise eine gewünschte Lüftintensität und/oder eine elektrische Leistung des Lüfters betreffen. Eine modulare Steuerung vereinfacht die Implementierung und Wartung.

Beispielsweise kann die Steuerungseinrichtung zumindest einen Sensoreingang aufweisen. Insbesondere kann die Steuerungseinrichtung in diesem Fall mit dem Temperatursensor im Luftansaugbereich an dem Sensoreingang verbunden sein. Beispielsweise kann die Steuerungseinrichtung basierend auf den von dem Temperatursensor empfangenen Temperaturmesswerten eine Steuerung der Transportkältemaschine vornehmen. Beispielsweise kann die Steuerungseinrichtung hierbei zumindest einen, mehrere und/oder alle Lüfter steuern, insbesondere einschalten, ausschalten und/oder in ihrer Lüftintensität regulieren.

Beispielsweise kann die Steuerungseinrichtung zumindest einen Lüfter im Lüfterbetrieb steuern. Auch kann die Steuerungseinrichtung zumindest einen Lüfter im Normalbetrieb steuern. Beispielsweise kann die Steuerungseinrichtung die Dauer des Lüfterbetriebs vorgeben. Beispielsweise kann die Dauer des Lüfterbetriebs auf einen vorgebbaren Wert festlegbar sein und/oder festgelegt sein. Die Steuerungseinrichtung kann beispielsweise zumindest einen Lüfter für die Dauer des Lüfterbetriebes mit einer Lüftintensität ungleich Null betreiben und den Lüfter nach Ablauf der für den Lüfterbetriebs vorgesehenen Dauer abschalten.

Beispielsweise kann die Steuerungseinrichtung zudem mit dem elektrischen Energiespeicher verbunden sein. Beispielsweise kann die Steuerungseinrichtung den Ladezustand des elektrischen Energiespeichers bestimmen. Beispielsweise kann dies über eine Spannungsmessung an dem elektrischen Energiespeicher erreicht werden. Auch kann die Steuerungseinrichtung beispielsweise mit einem Batteriemanagementsystem des elektrischen Energiespeichers verbunden sein und auf diese Art und Weise dessen Ladezustand und/oder weitere Zustandsinformationen abrufen.

Gemäß einem Ausführungsbeispiel ist die Steuerungseinrichtung zumindest teilweise von dem elektrischen Energiespeicher mit elektrischer Energie versorgt.

Die Steuerungseinrichtung kann zumindest teilweise und/oder vollständig von dem elektrischen Energiespeicher mit elektrischer Energie versorgt sein. Beispielsweise kann die Steuerungseinrichtung im Lüfterbetrieb zumindest zeitweise, insbesondere vollständig von dem elektrischen Energiespeicher mit elektrischer Energie versorgt sein. Die Steuerungseinrichtung kann beispielsweise direkt in einem 12V/24V-Spannungsband von dem Energiespeicher mit elektrischer Energie versorgt werden.

Gemäß einem Ausführungsbeispiel ist die Energiequelle und/oder der Energieversorgungsanschluss dazu eingerichtet, in einem 48V-Spannungsband elektrische Energie bereitzustellen.

Die Energiequelle kann insbesondere Gleichspannung und/oder Wechselspannung bereitstellen. Insbesondere stellt die Energiequelle eine mehrphasige, insbesondere dreiphasige Wechselspannung bereit. Auch kann die Energiequelle in einem 48V-Spannungsband Gleichspannung bereitstellen.

Die Transportkältemaschine kann beispielsweise zumindest einen weiteren Spannungswandler umfassen. Dieser kann insbesondere dazu eingerichtet sein, eine Wechselspannung, insbesondere eine mehrphasige/ dreiphasige Wechselspannung in eine Gleichspannung umzuwandeln, insbesondere in einem 48V-Spannungsband. In diesem Fall kann die Energiequelle ausschließlich Wechselspannung bereitstellen.

Gemäß einem Ausführungsbeispiel ist der zumindest eine Lüfter dazu eingerichtet, in zumindest zwei voneinander verschiedenen Lüftintensitäten betrieben zu werden. Insbesondere ist das Straßennutzfahrzeug und/oder die Transportkältemaschine dazu eingerichtet, den Lüfter im Normalbetrieb in zumindest einer ersten Lüftintensität zu betreiben und den Lüfter im Lüfterbetrieb in einer zweiten, von der zumindest einen ersten Lüftintensität verschiedenen, Lüftintensität zu betreiben. Dies kann beispielsweise mittels der Steuerungseinrichtung erreicht werden.. Beispielsweise kann die erste Lüftintensität höher sein als die zweite Lüftintensität.

Eine Lüftintensität kann beispielsweise über das transportierte Luftvolumen pro Zeiteinheit quantifiziert werden. Auch kann eine Lüftintensität über die per Konvektion transportierte Wärme quantifiziert werden. Auch kann die Lüftintensität anhand der elektrischen Leistungsaufnahme zumindest eines der Lüfter quantifiziert werden.

Eine Lüftintensität kann hierbei beispielsweise über die Drehzahl des jeweiligen Lüfters eingestellt werden. Es wurde erkannt, dass bei einer bis auf den Lüfter ausgeschalteten Transportkältemaschine (insbesondere im Lüfterbetrieb) nicht die gleiche Lüftintensität vonnöten ist, um den Luft- und Wärmetransport aufrechtzuerhalten, wie dies bei einer eingeschalteten Transportkältemaschine (insbesondere im Normalbetrieb) der Fall ist.

Durch eine geringere Lüftintensität im Lüfterbetrieb als im Normalbetrieb kann dieser besonders energiesparend für den elektrischen Energiespeicher sein.

Beispielsweise kann die Lüftintensität im Lüfterbetrieb als Funktion der Zeit reduziert werden, beispielsweise schrittweise und/oder kontinuierlich. Beispielsweise kann die Lüftintensität zu Beginn des Lüfterbetrieb zunächst der Lüftintensität des Normalbetriebs entsprechen und dann mit fortschreitender Zeit reduziert werden, insbesondere bis zum Stillstand des Lüfters.

Gemäß einem Ausführungsbeispiel kann das Straßennutzfahrzeug dazu eingerichtet sein, die Schritte durchzuführen
- Betreiben der Transportkältemaschine im Normalbetrieb,
- Betreiben der Transportkältemaschine im Lüfterbetrieb nach dem Betreiben im Normalbetrieb.

Gemäß einem Aufführungsbeispiel ist das Straßennutzfahrzeug ferner dazu
eingerichtet, den Schritt durchzuführen
- Betreiben der Transportkältemaschine in einem ausgeschalteten Betrieb oder im Normalbetrieb nach dem Betreiben im Lüfterbetrieb.

Das Straßenfahrzeug kann die Schritte insbesondere mittels der Steuerungseinrichtung durchführen. Dabei kann die Steuerungseinrichtung insbesondere Teil des Straßennutzfahrzeugs und/oder der Transportkältemaschine sein und/oder mit dem Temperatursensor, dem elektrischen Energiespeicher, der Energiequelle, der kälteerzeugenden Komponente und/oder zumindest einem der zumindest einen Lüfter in Kommunikationsverbindung stehen.

Bezüglich des Ablaufs der Schritte ist die Offenbarung des Verfahrens gemäß dem zweiten Aspekt auf das Straßennutzfahrzeug übertragbar.

Ein zweiter Aspekt gemäß der Erfindung betrifft ein Verfahren zum Betreiben eines Straßennutzfahrzeugs nach einem der vorangehenden Ansprüche, umfassend die Schritte:
- Betreiben der Transportkältemaschine im Normalbetrieb,
- Betreiben der Transportkältemaschine im Lüfterbetrieb nach dem Betreiben im Normalbetrieb.

Gemäß einem Aufführungsbeispiel umfasst das Verfahren ferner den Schritt
- Betreiben der Transportkältemaschine in einem ausgeschalteten Betrieb oder im Normalbetrieb nach dem Betreiben im Lüfterbetrieb.

Gemäß einem Ausführungsbeispiel schließt sich der Lüfterbetrieb im Wesentlichen unmittelbar an den Normalbetrieb an und/oder der Normalbetrieb oder der ausgeschaltete Betrieb schließt sich im Wesentlichen unmittelbar an den Lüfterbetrieb an.

Wenn sich ein erster Betriebsmodus im Wesentlichen unmittelbar an einen zweiten Betriebsmodus anschließt, folgt der erste Betriebsmodus ohne eine wesentliche zeitliche Verzögerung auf den zweiten Betriebsmodus. Beispielsweise können zwischen dem Ende des ersten Betriebsmodus und dem Beginn des zweiten Betriebsmodus transiente Vorgänge ablaufen, welche sich unter Umständen keinem der beiden Betriebsmodi eindeutig zuordnen lassen. Die Dauer zwischen dem Ende des ersten Betriebsmodus und dem Beginn des zweiten Betriebsmodus kann beispielsweise kürzer als 0,1s, 0,5s, 1s, 5s, 10s, 30s, 1min, 2min, 5min oder 10min sein. In diesen Fällen wird vorliegend davon gesprochen, dass der zweite Betriebsmodus im Wesentlichen unmittelbar auf den ersten Betriebsmodus folgt. Insbesondere liegt vorliegend zeitlich zwischen einem ersten der drei genannten Betriebsmodi (Normalbetrieb, Lüfterbetriebs, ausgeschalteten Betrieb) und einem unmittelbar darauf folgenden zweiten der drei Betriebsmodi nicht der von dem ersten und zweiten Betriebsmodus verschiedene, dritte Betriebsmodus.

Die anwendbaren Ausführungen zum ersten Aspekt finden auf den zweiten Aspekt Anwendung.

Gemäß einem Ausführungsbeispiel des offenbarten Verfahrens wird
- ein Wechsel von dem Normalbetrieb in den Lüfterbetrieb abhängig von einem Zustand der Energiequelle und/oder des Energieversorgungsanschlusses, von dem Ladezustand des elektrischen Energiespeichers, von einer Temperatur, insbesondere einer gemessenen Temperatur, insbesondere einer von dem Temperatursensor gemessenen Temperatur und/oder von einer Dauer, insbesondere einer vorgegebenen Dauer, durchgeführt und/oder
- ein Wechsel von dem Lüfterbetrieb in den Normalbetrieb und/oder in den ausgeschalteten Betrieb abhängig von einem Zustand der Energiequelle und/oder des Energieversorgungsanschlusses, von dem Ladezustand des elektrischen Energiespeichers, von einer Temperatur, insbesondere einer gemessenen Temperatur, insbesondere einer von dem Temperatursensor gemessenen Temperatur und/oder von einer Dauer, insbesondere einer vorgegebenen Dauer, durchgeführt.

Wenn ein Wechsel abhängig von dem Zustand der Energiequelle ist, kann damit insbesondere gemeint sein, dass eine Aktivierung und/oder Deaktivierung der Energiequelle einen Wechsel bedingt. Eine Aktivierung kann beispielsweise das Anschalten eines Generators und/oder eines den Generator betreibenden Motors umfassen. Eine Deaktivierung kann beispielsweise ein Ausschalten eines Generators und/oder eines den Generator betreibenden Motors umfassen.

Ein Zustand des Energieversorgungsanschlusses kann ebenfalls eine Aktivierung und/oder Deaktivierung des Energieversorgungsanschlusses umfassen. Beispielsweise ist der Energieversorgungsanschluss aktiviert, wenn dieser mit einer externen Energieversorgung verbunden ist. Demgegenüber ist der Energieversorgungsanschluss deaktiviert, wenn dieser nicht mit einer externen Energieversorgung verbunden ist.

Bei Aktivierung der Energiequelle und/oder des Energieversorgungsanschlusses kann ein Wechsel in den Normalbetrieb erfolgen, bei Deaktivierung ein Wechsel in den Lüfterbetrieb.

Bei Unterschreiten eines vorbestimmten Ladezustands des elektrischen Energiespeichers kann von dem Lüfterbetrieb in den Normalbetrieb und/oder in den ausgeschalteten Betrieb gewechselt werden. Bei Überschreiten eines vorbestimmten Ladezustands kann von dem Normalbetrieb in den Lüfterbetrieb geschaltet werden.

Wenn ein Wechsel abhängig von einer Dauer, insbesondere einer vorgebbaren Dauer, stattfindet, kann beispielsweise für einen der Betriebsmodi eine Dauer festgelegt werden. Ab einem Wechsel in den Betriebsmodus wird der Betriebsmodus für die festgelegte Dauer aufrecht erhalten. Danach wird in einen anderen Betriebsmodus gewechselt. Beispielsweise kann die Dauer in einem Steuergerät, insbesondere dem Steuergerät, hinterlegt sein. Beispielsweise kann die Dauer zusätzlich oder alternative abhängig anderen Faktoren sein wie beispielsweise dem Ladezustand des elektrischen Energiespeichers, der Außentemperatur, der Innentemperatur im zu temperierenden Innenraum und/oder Kombinationen heraus.

Ein Wechsel kann abhängig von einer Temperatur sein, insbesondere von einer gemessenen Temperatur, insbesondere einer gemessenen Temperatur von dem Temperatursensor. Kann insbesondere das Überschreiten und/oder Unterschreiten einer vorbestimmten Temperatur einen Wechsel auslösen. Bei einem Überschreiten einer vorbestimmten Temperatur kann für einen zu kühlenden Innenraum ein Wechsel in den Normalbetrieb ausgelöst werden, beispielsweise ausgehend von dem Lüfterbetrieb und/oder dem ausgeschalteten Betrieb. Ein Unterschreiten einer vorbestimmten Temperatur kann einen Wechsel in den Lüfterbetrieb auslösen. In einem Heizbetrieb der Transportkältemaschine kann der oben beschriebene Umschaltvorgang umgekehrt vollzogen werden.

Folgende Ausführungen beziehen sich gleichermaßen auf den dritten und den vierten Aspekt.

Wenn die Steuerungseinrichtung in Kommunikationsverbindung mit einem weiteren Element steht, ist hiervon umfasst, dass die Steuerungseinrichtung Informationen mit dem Element austauschen kann, insbesondere Informationen zu dem Element übermitteln und/oder von dem Element empfangen kann. Von einer Kommunikationsverbindung ist ebenfalls eine Steuermöglichkeit umfasst. Wenn beispielsweise die Steuerungseinrichtung auf eine anderes Element Einfluss nehmen kann, steht die Steuerungseinrichtung in Kommunikationsverbindung mit dem Element. In diesem Falle kann von einer Steuerungsverbindung gesprochen werden.

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren zu entnehmen. Die der Anmeldung beiliegenden Figuren sollen jedoch nur dem Zwecke der Verdeutlichung, nicht aber zur Bestimmung des Schutzbereiches der Erfindung dienen. Die beiliegenden Zeichnungen sind nicht notwendigerweise maßstabsgetreu und sollen lediglich das allgemeine Konzept der vorliegenden Erfindung beispielhaft widerspiegeln. Insbesondere sollen Merkmale, die in den Figuren enthalten sind, keineswegs als notwendiger Bestandteil der vorliegenden Erfindung erachtet werden.

Es zeigen:
- Fig. 1: eine schematische Darstellung einer beispielhaften Ausführungsform eines Straßennutzfahrzeugs gemäß der Erfindung;
- Fig. 2: eine schematische Darstellung einer beispielhaften Ausführungsform eines Straßennutzfahrzeugs umfassend eine Transportkältemaschine gemäß der Erfindung;
- Fig. 3: eine schematische Darstellung einer beispielhaften Ausführungsform einer Transportkältemaschine gemäß der Erfindung;
- Fig. 4a,b: eine schematische Darstellung einer beispielhaften Ausführungsform einer Betriebsart einer Transportkältemaschine gemäß der Erfindung.

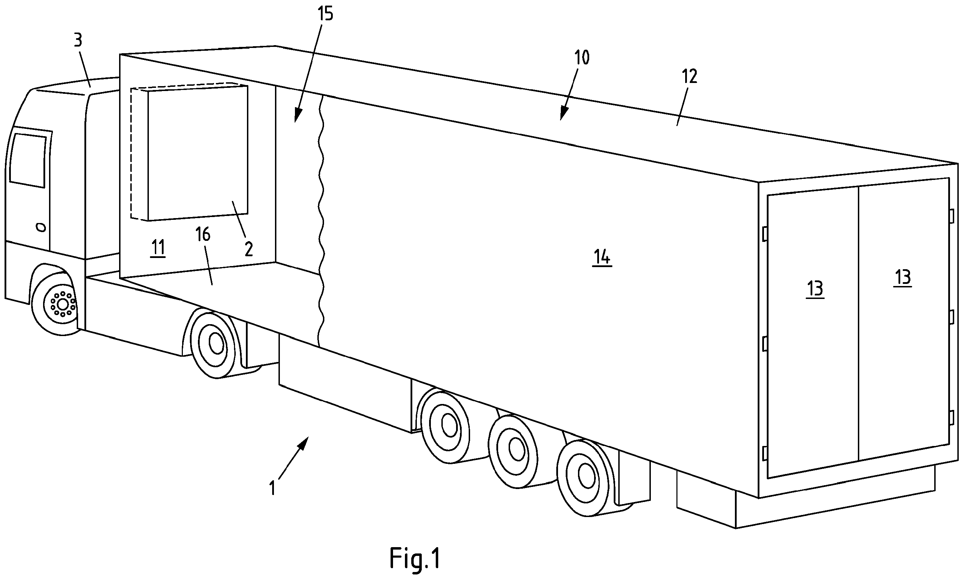

Fig. 1 ist eine schematische Darstellung einer beispielhaften Ausführungsform eines Straßennutzfahrzeugs 1 gemäß der Erfindung.

Das gezeigte Straßennutzfahrzeug 1 ist ein Sattelauflieger 1 mit einem Kofferaufbau 10. Der Kofferaufbau 10 umfasst eine feste Stirnwand 11, ein festes Dach 12, eine durch Flügeltüren 13 gebildete Rückwand und feste Seitenwände 14. Der Kofferaufbau 10 umschließt dabei einen Laderaum 15 zur Aufnahme von zu transportierenden Gütern. Die vordere Seitenwand 14 ist in Fig. 1 teilweise weggelassen worden, um den Blick in den Laderaum 15, auf den Ladeboden 16 und auf die in der Stirnwand 11 montierte Transportkältemaschine 2 freizugeben, die lediglich schematisch dargestellt ist.

Die Transportkältemaschine 2 dient zum Kühlen des Laderaums 15, so dass temperaturempfindliche Güter in dem Laderaum 15 transportiert werden können. Zu diesem Zweck kann die Transportkältemaschine 2 beispielsweise Luft kühlen und anschließend in den Laderaum 15 blasen.

Ferner kann der Sattelauflieger einen elektrischen Generator 17 (nicht dargestellt) in Form eines Achsgenerators aufweisen, der durch die Drehung einer oder mehrerer Achsen des Sattelaufliegers 1 angetrieben wird und dementsprechend elektrische Energie in Form einer Wechselspannung (z.B. eine dreiphasige Wechselspannung mit einer Spannung in Höhe von 300V bis 540 V (z.B. 400 V) (Effektivwert der verketteten Spannungen)) erzeugt und/oder erzeugen kann, wenn sich der Sattelauflieger 1 in Fahrt befindet

Der Sattelauflieger 1 wird von einem Zugfahrzeug 3 gezogen.

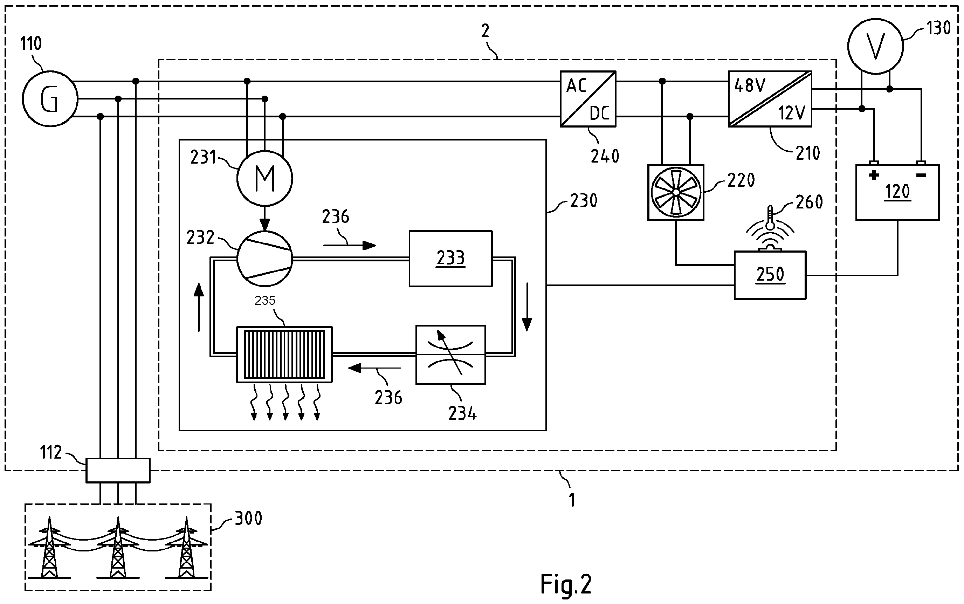

Figur 2 zeigt ein schematisches Schaltbild eines Straßennutzfahrzeugs 1 gemäß einer beispielhaften Ausführungsform gemäß der Erfindung wie es in Fig. 1 gezeigt ist.

Zu sehen ist eine Transportkältemaschine 2. Diese ist angeschlossen an eine Energiequelle 110. Die Energiequelle 110 ist in der gezeigten Ausführungsform als Generator 110 ausgebildet.

Der Generator 110 kann beispielsweise von einem Motor angetrieben werden, insbesondere von einem in der Transportkältemaschine 2 integrierten Motor, beispielsweise einem Verbrennungsmotor, insbesondere einem Dieselmotor. Der Generator 110 kann beispielsweise auch in Form eines Achsgenerators vorliegen. In diesem Falle wird der Generator 110 durch die Drehung einer Achse des Straßennutzfahrzeugs 1 angetrieben wird und dementsprechend elektrische Energie erzeugt und/oder erzeugen kann, wenn sich das Straßennutzfahrzeug 1 in Fahrt befindet. Der Achsgenerator kann beispielsweise einen elektrischen Energiespeicher, beispielsweise eine Hochspannungsbatterie aufladen, welcher in diesem Falle Teil der Energiequelle 110 ist.

Der Generator 110 kann ebenfalls mit dem Antriebsstrang, insbesondere dem Motor, insbesondere einem Verbrennungsmotor, des Straßennutzfahrzeugs 1, angetrieben werden. Der Generator 110 kann in dem Fall insbesondere mit einem Dieselmotor, insbesondere dem Dieselmotor, welcher das Straßennutzfahrzeug 1 antreibt, angetrieben werden.

Der Generator 110 ist insbesondere dazu eingerichtet, elektrische Energie in Form einer Wechselspannung (z.B. eine dreiphasige Wechselspannung mit einer Spannung in Höhe von 300V bis 540 V (z.B. 400 V) (Effektivwert der verketteten Spannungen)) bereitzustellen.

Auch zeigt Figur 2 einen Energieversorgungsanschluss 112. Der Energieversorgungsanschluss 112 ist insbesondere dazu eingerichtet, dass Straßennutzfahrzeug 110 mit einer externen Energieversorgung 300 zu verbinden. Die externe Energieversorgung 300 kann insbesondere ein Energieversorgungsnetz umfassen. Ebenfalls kann die externe Energieversorgung 300 eine Ladeinfrastruktur umfassen. Der Energieversorgungsanschluss 112 kann beispielsweise in Form einer Steckdose, wie beispielsweise einer Drehstromstreckdose (bspw. CEE), vorgesehen sein. Auch kann der Energieversorgungsanschluss 112 die Form eines Ladeanschlusses, insbesondere einer Ladesteckers und/oder einer Ladebuchse annehmen, insbesondere eines im automobilen Bereich üblichen Ladeanschlusses.

Die Transportkältemaschine 2 ist mit der Energiequelle 110 und dem Energieversorgungsanschluss 112 elektrisch verbunden. Insbesondere kann diese Verbindung dreiphasig ausgeführt sein, zur Übertragung einer dreiphasigen Wechselspannung. Die jeweiligen Verbindungen können beispielsweise unmittelbar ausgeführt sein. Auch können mittelbare Verbindungen vorgesehen sein, beispielsweise über ein jeweiliges Relais.

Die Transportkältemaschine 2 umfasst zumindest eine kälteerzeugende Komponente 230, insbesondere einen Kühlkreislauf 230. Die Transportkältemaschine 2 umfasst ferner einen Motor, insbesondere ein Elektromotor. Der Motor kann über einen dreiphasigen Anschluss betrieben werden. Insbesondere kann die kälteerzeugende Komponente 230 mit einer dreiphasigen Wechselspannung (z.B. eine dreiphasige Wechselspannung mit einer Spannung in Höhe von 300V bis 540 V (z.B. 400 V) (Effektivwert der verketteten Spannungen)) betrieben werden. Der Motor kann Teil der kälteerzeugenden Komponente 230 sein.

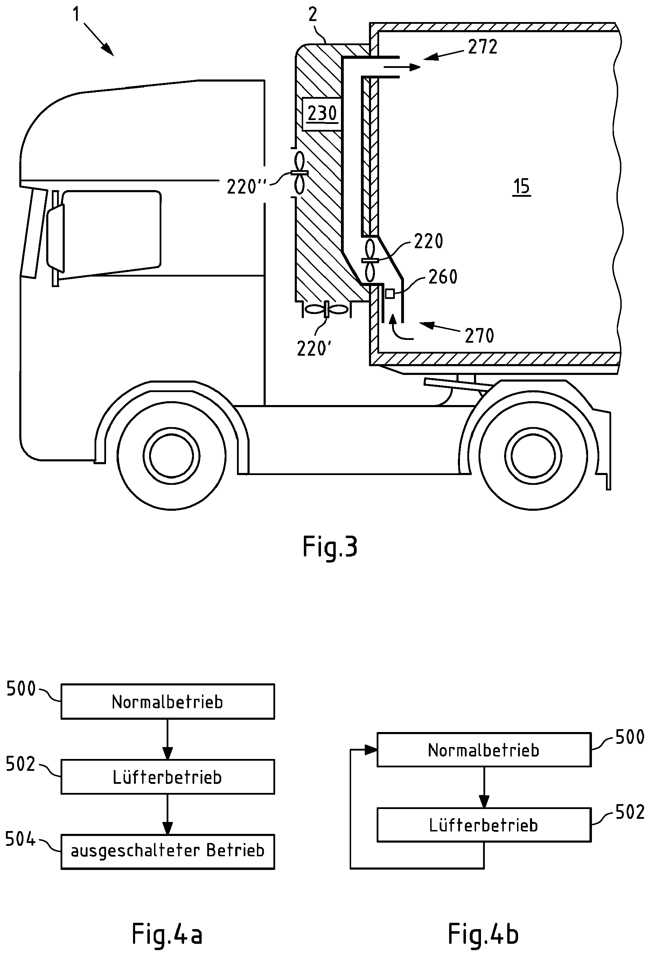

Die Transportkältemaschine 2 umfasst ferner zumindest einen Lüfter 220. Der Lüfter 220 ist dazu eingerichtet, in einem 48V-Spannungsband mit elektrischer Energie versorgt zu werden, insbesondere mit einer Gleichspannung. Die Transportkältemaschine 2 kann insbesondere mehrere Lüfter (vgl. Lüfter 220, 220' und 220" in Fig. 3) umfassen, welche beispielsweise verschiedene Funktionen erfüllen wie das Ansaugen von Außenluft, das Kühlen von Komponenten, die Zirkulation von Innenluft, etc.

Die Transportkältemaschine 2 umfasst ferner einen Spannungswandler 210. Der Spannungswandler 210 ist dazu eingerichtet, einen bidirektionalen Leistungsfluss zwischen einem 48V-Spannungsband und einem 12V/24V-Spannungsband zu ermöglichen.

Der Spannungswandler 210 ermöglicht somit sowohl einen Leistungsfluss ausgehend von dem 48V-Spannungsband in ein 12V/24V-Spannungsband, als auch ausgehend von dem 12V/24V-Spannungsband in das 48V-Spannungsband.

Die Transportkältemaschine kann einen weiteren Spannungswandler 240 umfassen. Der weitere Spannungswandler 240 ist insbesondere dazu eingerichtet, eine Wechselspannung, insbesondere eine dreiphasige Wechselspannung, insbesondere mit einer Spannung in Höhe von 300V bis 540 V (z.B. 400 V) (Effektivwert der verketteten Spannungen)), in eine Gleichspannung, insbesondere in einem 48V-Spannungsband, umzuwandeln. Auf diese Art und Weise kann der weitere Spannungswandler 240 eine Versorgung des zumindest einen Lüfters 220 aus der Energiequelle 110 und/oder dem Energieversorgungsanschluss 112 ermöglichen. Der weitere Spannungswandler 240 ist insbesondere unidirektional und erlaubt lediglich einen Leistungsfluss ausgehend von der Wechselspannung zu der Gleichspannung.

Das Straßennutzfahrzeug 1 umfasst ferner einen elektrischen Energiespeicher 120. Der elektrische Energiespeicher 120 ist insbesondere eine Batterie. Der elektrische Energiespeicher 120 ist insbesondere dafür eingerichtet, in einem 12V/24V-Spannungsband betrieben zu werden, insbesondere in diesem aufgeladen zu werden und/oder in diesem Energie bereitzustellen. Der elektrische Energiespeicher 120 ist insbesondere Teil eines Bordnetzes, beispielsweise eines Trailerbordnetzes, des Straßennutzfahrzeugs 1. Das Bordnetz umfasst ferner einen Verbraucher 130.

Verbraucher kann beispielsweise ein Leuchtmittel, ein Sensor, ein Messinstrument, ein Signalgeber, eine Anzeige, ein Lautsprecher, eine Heizung und/oder Kombinationen hieraus sein.

Mittels des Spannungswandlers 210 kann der Energiespeicher 120 ausgehend von der Transportkältemaschine 2 mit Energie versorgt, insbesondere elektrisch aufgeladen werden. Beispielsweise kann ein elektrischer Leistungsfluss ausgehend von der Energiequelle 110 als dreiphasige Wechselspannung über den weiteren Spannungswandler 240 in ein 48V-Spannungsband umgewandelt werden und von da mittels des Spannungswandlers 210 in ein 12V/24V-Spannungsband umgewandelt werden, in welchem der Leistungsfluss zum Versorgen des elektrischen Energiespeichers 120, insbesondere zu dessen Aufladung genutzt werden kann.

Gleichermaßen kann mittels des Spannungswandlers ein Leistungsfluss ausgehend von dem elektrischen Energiespeicher 120 zu zumindest einer Komponente der Transportkältemaschine 2 ermöglicht werden. Insbesondere kann eine Leistung, welche seitens des elektrischen Energiespeichers 120 in einem 12V/24V-Spannungsband bereitgestellt wird, mittels des Spannungswandlers 210 in eine 48V-Spannungsband umgewandelt werden, in welchem eine Komponente der Transportkältemaschine 2, insbesondere der Lüfter 220, mit elektrischer Energie versorgt werden kann.

Beispielsweise kann das Straßennutzfahrzeug 1 derart eingerichtet sein, dass der elektrische Energiespeicher 120 ausschließlich über die Transportkältemaschine 2, insbesondere über deren Spannungswandler 210 mit elektrischer Energie versorgt, insbesondere aufgeladen wird.

Die Transportkältemaschine 2 weist als elektrische Verbraucher unter anderem einen Anlasser auf. Auch kann zumindest eine Telematikkomponente vorgesehen sein, welche beispielsweise Teil der Transportkältemaschine 2 ist oder auch nicht Teil der Transportkältemaschine 2 ist. Die Transportkältemaschine 2 kann ferner eine Steuerungseinrichtung 250 aufweisen. Steuerungseinrichtungen 250 kann beispielsweise mit zumindest einem der Lüfter 220 verbunden sein. Die Verbindung zwischen der Steuerungseinrichtung 250 und dem Lüfter 220 kann insbesondere eine Kommunikationsverbindung, insbesondere eine Steuerungsverbindung sein. Eine Steuerungsverbindung ermöglicht eine Einflussnahme seitens der Steuerungseinrichtung 250 auf den Lüfter 220. Eine Steuerungsverbindung setzt keine unmittelbare physische Verbindung zwischen den Komponenten voraus. Beispielsweise kann eine Steuerungsverbindung als eine Datenverbindung, beispielsweise über einen Datenbus, ermöglicht werden. Die Steuerungseinrichtung 250 kann den Lüfter 220 steuern. Die Steuerungseinrichtung 250 kann insbesondere zumindest einen Lüfter 220 der Transportkältemaschine 2 ausschalten und/oder anschalten. Beispielsweise kann die Steuerungseinrichtung 250 zumindest einen Lüfter 220 in seiner Lüftintensität, beispielsweise in seiner Drehzahl regulieren, insbesondere auf einen vordefinierten Wert einstellen und/oder die momentane Drehzahl erhöhen und/oder verringern.

Die Steuerungseinrichtung 250 kann beispielsweise zumindest einen Eingang umfassen. Beispielsweise kann die Steuerungseinrichtung 250 mit einem Sensor 260 verbunden sein, insbesondere mit einem Temperatursensor 260. Auch kann die Steuerungseinrichtung 250 mit dem elektrischen Energiespeicher 120 verbunden sein. Beispielsweise kann die Steuerungseinrichtung 250 Informationen über den Ladezustand des elektrischen Energiespeichers 120 empfangen.

Die Steuerungseinrichtung 250 kann Einfluss nehmen auf die zumindest eine kälteerzeugende Komponente 230 der Transportkältemaschine 2. Beispielsweise kann die Steuerungseinrichtung 250 eine Kühlleistung der zumindest eine kälteerzeugenden Komponente 230 der Transportkältemaschine 2 in Abhängigkeit von der von dem Temperatursensor 260 erfassten Temperatur steuern. Die Kühlleistung kann beispielsweise als die aus einem zu kühlenden Innenraum heraustransportierte Wärme pro Zeiteinheit bestimmt sein. Beispielsweise kann die Abweichung der von dem Temperatursensor 260 erfassten Temperatur von einer Soll-Temperatur bestimmt werden und in Abhängigkeit von dieser Abweichung eine Kühlleistung der kälteerzeugenden Komponente 230 eingestellt werden. Die Kühlleistung kann beispielsweise mit der Leistung der kälteerzeugenden Komponente, insbesondere mit der effektiven Kühlleistung oder auch mit der aufgenommenen elektrischen Leistung korrespondieren. Die Steuerung des zumindest einen Lüfters 220 durch die Steuerungseinrichtung 250 kann ebenfalls in Abhängigkeit von einer von dem zumindest einen Temperatursensor 260 empfangenen Temperatur geschehen.

Die Steuerungseinrichtung 250 kann ebenfalls dazu eingerichtet sein, den Spannungswandler 210 zu steuern. Beispielsweise kann über den Spannungswandler 210 eine Ladeleistung für den elektrischen Energiespeicher 120 eingestellt werden. Insbesondere kann die Ladeleistung des elektrischen Energiespeichers 120 durch den Spannungswandler 210 durch die Steuerungseinrichtung 250 in Abhängigkeit von einem Ladezustand des elektrischen Energiespeichers, insbesondere einem empfangenen Ladezustand, insbesondere von dem Temperatursensor 260 empfangenen Ladezustand, des elektrischen Energiespeichers 120 gesteuert werden.

Die kälteerzeugende Komponente 230 umfasst insbesondere einen Motor 231, insbesondere einen Elektromotor 231. Der Motor 231 wird insbesondere über einen dreiphasigen Anschluss versorgt, insbesondere mit einer dreiphasigen Wechselspannung, insbesondere mit einer Spannung in Höhe von 300V bis 540 V (z.B. 400 V) (Effektivwert der verketteten Spannungen).

Die kälteerzeugende Komponente 230 umfasst ferner einen Kühlkreis. Der Kühlkreis umfasst einen durch den elektrischen Motor 231 angetriebenen Verdichter 232, einen Kondensator 232, eine Drosseleinrichtung 233 in Form eines Drosselventils und einem Wärmetauscher 234. In dem Kühlkreis strömt das von dem Verdichter 232 verdichtete Kältemittel über den Kondensator 233 und das in Strömungsrichtung hinter dem Kondensator 232 angeordnete Drosselventil 234 zu dem Wärmetauscher 235. In dem Wärmetauscher 235 wird das zuvor verflüssigte Kältemittel expandiert und entzieht dabei einem getrennt von dem Kältemittel durch den Wärmetauscher 235 geleiteten Luftstrom Wärme, so dass die Luft des Luftstroms gekühlt wird. Die gekühlte Luft dieses Luftstroms wird anschließend beispielsweise in den Laderaum 15 des Sattelaufliegers 1 geblasen, um diesen zu kühlen. Die Strömungsrichtung des Kältemittels in dem Kühlkreis ist durch die Pfeile 236 in Fig. 3 angedeutet.

Figur 3 zeigt eine schematische Detaildarstellung eines Straßennutzfahrzeugs 1 aus Fig. 1 gemäß einer beispielhaften Ausführungsform gemäß der Erfindung. Die Detaildarstellung zeigt eine mögliche Anordnung des Temperatursensors 260 sowie der Lüfter 220, 220' und 220" der Transportkältemaschine 2 aus Fig. 2.

Die Transportkältemaschine 2 umfasst einen Luftansaugbereich 270. der Luftansaugbereich 270 umfasst insbesondere eine Öffnung, welche sich zum Laderaum 15 des Straßennutzfahrzeugs (insbesondere Sattelaufliegers) 1 hin öffnet. Durch den Luftansaugbereich 270 kann Luft aus dem Laderaum 15 herausgezogen und der Transportkältemaschine 2 zugeführt werden. Der Bereich umfasst insbesondere einen Lüfter 220. Der Lüfter 220 dient insbesondere der Zuführung von Innenluft des Laderaums 15 zu der Transportkältemaschine 2. Der Lüfter kann wie gezeigt, im Luftansaugbereich 270 angeordnet sein oder auch anderswo, beispielsweise im Luftausblasbereich 272. In dem Luftansaugbereich 270 ist ein Temperatursensor 260 angeordnet. Durch die Positionierung des Temperatursensors 260 im Luftansaugbereich 270 wird erreicht, dass der Temperatursensor 260 die Innentemperatur in dem Laderaum 15 erfasst.

Die Transportkältemaschine 2 umfasst ferner einen Lüfter 220'. Der Lüfter 220' ist insbesondere dafür eingerichtet, Außenluft in die Transportkältemaschine 2 zu transportieren. Die Transportkältemaschine 2 umfasst eine Lüfter 220". Der Lüfter 220" ist dazu eingerichtet, zumindest einen Teil der Transportkältemaschine 2 zu lüften, insbesondere zu kühlen.

Die Transportkältemaschine 2 umfasst ferner eine Luftausblasbereich 272. Der Luftausblasbereich 272 umfasst eine Öffnung in den Laderaum 15 des Sattelaufliegers 1. Der Luftausblasbereich 272 ist insbesondere oberhalb von dem Luftansaugbereich 270 angeordnet. Solange der Lüfter 220 einen Luftstrom ausgehend von dem Luftansaugbereich 270 zu dem Luftausblasbereich 272 bewirkt, wird der Temperatursensor 260 mit Innenluft des Laderaum 15 umströmt. Innerhalb der Transportkältemaschine 2 wird die eingesogene Luft gekühlt, insbesondere mittels einer kälteerzeugenden Komponente 230, und in dem Luftausblasbereich 272 kalt ausgegeben. Wird nun der Lüfter 220 ausgeschaltet, beispielsweise wenn das Fahrzeug zum Stillstand kommt und/oder der Generator 110 abgeschaltet wird (insbesondere ein den Generator 110 antreibender Motor) und die Transportkältemaschine vollständig abgeschaltet wird, lüftet der Lüfter 220 nicht mehr. Die kälteerzeugenden Komponenten 230 innerhalb der Transportkältemaschine 2 kühlen dennoch zumindest zeitweise die Luft oberhalb des Luftansaugbereichs 270. Die Luft innerhalb der Transportkältemaschine 2 tendiert somit dazu, von der Schwerkraft angetrieben durch den Luftansaugbereich 270 nach unten zu strömen. Dabei erreicht den Temperatursensor 260 kalte Luft. Die gemessene Temperatur entspricht in diesem Fall nicht mehr der Innentemperatur des Laderaum 15. Durch das Vorsehen eines Lüfterbetriebs, in welchem ein Lüfter, beispielsweise der Lüfter 220, auch nach Abschaltung des Generators 110 zumindest zeitweise weiterläuft, werden solche Fehlmessungen durch den Temperatursensor 260 vermieden.

Figur 4a,b zeigen schematische Flussbilder von Betriebsmodi der Transportkältemaschine 2 auf Fig. 2 in einer beispielhaften Ausführungsform gemäß der Erfindung.

In Figur 4a wird die Transportkältemaschine 2 zunächst in einem Normalbetrieb 500 Betrieben. Der Generator 110 und/oder der Energieversorgungsanschluss 112 versorgen die Transportkältemaschine 2 mit elektrischer Energie. Die Transportkältemaschine 2 geht sodann in den Lüfterbetrieb 502 über. Der Auslöser hierfür kann beispielsweise Steuerbefehl seitens der Steuerungseinrichtung 250, beispielsweise basierend auf einer von eine Temperatursensor 260 gemessenen Temperatur im Laderaum 15, eine Abschaltung des Generators 110 und/oder eine Abkopplung des Energieversorgungsanschlusses 112 sein.

Im Lüfterbetrieb 502 ist zumindest ein Lüfter 220, 220', 220" der Transportkältemaschine 2 angeschaltet. Beispielsweise kann zumindest ein Lüfter 220, 220', 220" im Lüfterbetrieb 502 ausgeschaltet sein. Auch ist es möglich, dass zumindest ein Lüfter 220, 220', 220" mit einer von der Lüftintensität im Normalbetrieb 500 abweichende Lüftintensität betrieben wird. Beispielsweise kann die Lüftintensität im Lüfterbetrieb 502 niedriger sein als die Lüftintensität im Normalbetrieb 500.

In Figur 4a folgt auf den Lüfterbetrieb 502 ein ausgeschalteter Betrieb 504. Beispielsweise kann der Wechsel von Lüfterbetriebs 102 zu ausgeschaltetem Betrieb 504 abhängig von einer Dauer des Lüfterbetriebs 502 stattfinden. Beispielsweise kann der Lüfterbetrieb 502 auf eine vorgegebene Dauer limitiert sein. Auch kann die Umschaltung von Lüfterbetrieb 502 zu ausgeschaltetem Betrieb 504 basierend auf einer Messung stattfinden, beispielsweise basierend auf einer Temperaturmessung, insbesondere durch den Temperatursensor 260 und/oder basierend auf einem Ladezustand des elektrischen Energiespeichers 120.

In Figur 4b ist ein zu Figur 4a ähnlicher Übergang zwischen Normalbetrieb 500 und Lüfterbetrieb 502 gezeigt. Im Unterschied zu dem in Figur 4a gezeigten Verlauf, geht die Transportkältemaschine 2 in Figur 4b nach dem Lüfterbetrieb 502 wieder in den Normalbetrieb 500 über. Der Übergang von Lüfterbetrieb 502 zu Normalbetrieb 500 kann insbesondere unmittelbar und im Wesentlichen ohne weitere Zwischenstufen und/oder Betriebsmodi der Transportkältemaschine 2 geschehen. Beispielsweise kann der Übergang von Lüfterbetriebs 502 zu Normalbetrieb 500 abhängig von einem Ladezustand des elektrischen Energiespeichers 120, von einer Temperatur, insbesondere gemessen von den Temperatursensor 260, einer Dauer, insbesondere einer vorgebbaren und/oder vorgegebenen Dauer des Lüfterbetriebes, abhängig von dem Generator 110 und/oder Kombinationen hieraus stattfinden. Beispielsweise kann ein fortlaufender Wechsel zwischen Normalbetrieb 500 und Lüfterbetriebs 502 vorgesehen sein. Hierdurch kann insbesondere die Energiequelle 110 zumindest übergangsweise, nämlich während des Lüfterbetriebes 502, die Energieversorgung der Transportkältemaschine 2 unterbrechen. Hierdurch wird der Betrieb der Transportkältemaschine 2 energieeffizienter.

Die in dieser Spezifikation beschriebenen beispielhaften Ausführungsformen der vorliegenden Erfindung sollen auch in allen Kombinationen miteinander offenbart verstanden werden. Insbesondere soll auch die Beschreibung eines von einer Ausführungsform umfassten Merkmals - sofern nicht explizit gegenteilig erklärt - vorliegend nicht so verstanden werden, dass das Merkmal für die Funktion des Ausführungsbeispiels unerlässlich oder wesentlich ist. Die Abfolge der in dieser Spezifikation geschilderten Verfahrensschritte in den einzelnen Flussdiagrammen ist nicht zwingend, alternative Abfolgen der Verfahrensschritte sind denkbar - soweit nicht anders angegeben. Die Verfahrensschritte können auf verschiedene Art und Weise implementiert werden, so ist eine Implementierung in Software (durch Programmanweisungen), Hardware oder eine Kombination von beidem zur Implementierung der Verfahrensschritte denkbar.

In den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teilweise" als auch der Fall "vollständig". Die Formulierung "und/oder" soll dahingehend verstanden werden, dass sowohl die Alternative als auch die Kombination offenbart sein soll, also "A und/oder B" bedeutet "(A) oder (B) oder (A und B)". Eine Mehrzahl von Einheiten, Personen oder dergleichen bedeutet im Zusammenhang dieser Spezifikation mehrere Einheiten, Personen oder dergleichen. Die Verwendung des unbestimmten Artikels schließt eine Mehrzahl nicht aus. Eine einzelne Komponente kann die Funktionen mehrerer in den Patentansprüchen genannten Einheiten bzw. Einrichtungen ausführen. In den Patentansprüchen angegebene Bezugszeichen sind nicht als Beschränkungen der eingesetzten Mittel und Schritte anzusehen.

## Patentansprüche

1. Straßennutzfahrzeug (1) umfassend
- einen elektrischen Energiespeicher (120), wobei der elektrische Energiespeicher (120) dazu eingerichtet ist, in einem 12V/24V-Spannungsband elektrische Energie bereitzustellen,
- eine Transportkältemaschine (2) umfassend:
(i) zumindest einen Lüfter (220), wobei der Lüfter (220) dazu eingerichtet ist, in einem 48V-Spannungsband mit elektrischer Energie betrieben zu werden,
(ii) einen Spannungswandler (210), wobei der Spannungswandler (210) dazu eingerichtet ist, einen bidirektionalen elektrischen Leistungsfluss zwischen dem 12V/24V-Spannungsband an einem 12V/24V-Anschluss des Spannungswandlers und dem 48V-Spannungsband an einem 48V-Anschluss des Spannungswandlers zu ermöglichen, wobei der 12V/24V-Anschluss mit dem elektrischen Energiespeicher (120) elektrisch verbunden ist und der 48V-Anschluss mit dem Lüfter (220) elektrisch verbunden ist,
(iii) eine Energiequelle (110), wobei die Energiequelle (110) dazu eingerichtet ist, die Transportkältemaschine (1) in einem Normalbetrieb mit elektrischer Energie zu versorgen, und/oder
einen Energieversorgungsanschluss (112), wobei der Energieversorgungsanschluss (112) dazu eingerichtet ist, elektrische Energie zur Versorgung der Transportkältemaschine (1) in dem Normalbetrieb von einer externen elektrischen Energieversorgung zu empfangen,
wobei das Straßennutzfahrzeug (1) dazu eingerichtet ist, in einem Lüfterbetrieb der Transportkältemaschine (2) zumindest einen Lüfter der Transportkältemaschine (2) aus dem elektrischen Energiespeicher (120) mittels des Spannungswandlers (210) mit elektrischer Energie zu versorgen, wobei die Transportkältemaschine (2) in dem Lüfterbetrieb weder aus der Energiequelle (110) noch über den Energieversorgungsanschluss (112) mit elektrischer Energie versorgt wird.

2. Straßennutzfahrzeug (1) nach Anspruch 1, wobei das Straßennutzfahrzeug (1) dazu eingerichtet ist, im Normalbetrieb den elektrischen Energiespeicher (120) mittels des Spannungswandlers (210) mit elektrischer Energie zu versorgen, insbesondere aufzuladen.

3. Straßennutzfahrzeug (1) nach Anspruch 1 und 2, wobei das Straßennutzfahrzeug (1) und/oder die Transportkältemaschine (2) dazu eingerichtet ist, im Lüfterbetrieb eine kälteerzeugende Komponente der Transportkältemaschine (2) zu deaktivieren.

4. Straßennutzfahrzeug (1) nach einem der Ansprüche 1 bis 3, wobei die Energiequelle (110) ein Generator ist, insbesondere ein mit einem Brennstoff, insbesondere einem fossilen Brennstoff, betriebener Generator, insbesondere ein Dieselgenerator, und/oder wobei der Energieversorgungsanschluss (112) eine Ladebuchse, insbesondere für eine Ladeinfrastruktur, und/oder eine Drehstromsteckdose umfasst.

5. Straßennutzfahrzeug (1) nach einem der Ansprüche 1 bis 4, wobei der zumindest eine Lüfter (220) dazu eingerichtet ist:
(i) temperierte Luft von der Transportkältemaschine (2) in einen Innenraum des Straßennutzfahrzeugs (1) zu transportieren, und/oder
(ii) Außenluft in die Transportkältemaschine (2) zu transportieren, und/oder
(iii) zumindest einen Teil der Transportkältemaschine (2) zu lüften, insbesondere zu kühlen.

6. Straßennutzfahrzeug (1) nach einem der Ansprüche 1 bis 5, wobei die Transportkältemaschine (2) in einem Luftansaugbereich (270) der Transportkältemaschine (2) zumindest einen Temperatursensor (260) umfasst.

7. Straßennutzfahrzeug (1) nach einem der Ansprüche 1 bis 6, wobei der elektrische Energiespeicher (120) dazu eingerichtet ist, ein Bordnetz des Straßennutzfahrzeugs (1) mit elektrischer Energie zu versorgen, wobei das Bordnetz insbesondere in einem 12V/24V-Spannungsband betrieben wird.

8. Straßennutzfahrzeug (1) nach einem der Ansprüche 1 bis 7, wobei das Straßennutzfahrzeug zumindest einen Anhänger für Straßennutzfahrzeuge umfasst oder ein solcher Anhänger ist.

9. Straßennutzfahrzeug (1) nach einem der Ansprüche 1 bis 8, wobei das Straßennutzfahrzeug (1), insbesondere die Transportkältemaschine (2), eine Steuerungseinrichtung (250) umfasst, wobei die Steuerungseinrichtung (250) dazu eingerichtet ist, den zumindest einen Lüfter (220) zu steuern, insbesondere im Lüfterbetrieb zu steuern.

10. Straßennutzfahrzeug (1) nach Anspruch 9, wobei die Steuerungseinrichtung (250) zumindest teilweise von dem elektrischen Energiespeicher (120) mit elektrischer Energie versorgt ist.

11. Straßennutzfahrzeug (1) nach einem der Ansprüche 1 bis 10, wobei die Energiequelle (110) und/oder der Energieversorgungsanschluss (112) dazu eingerichtet ist, in einem 48V-Spannungsband elektrische Energie bereitzustellen, und/oder wobei die Transportkältemaschine (2) in einem 48V-Spannungsband betrieben wird.

12. Straßennutzfahrzeug (1) nach einem der Ansprüche 1 bis 11, wobei der zumindest eine Lüfter (220) dazu eingerichtet ist, in zumindest zwei voneinander verschiedenen Lüftintensitäten betrieben zu werden.

13. Straßennutzfahrzeug (1) nach einem der Ansprüche 1 bis 12, wobei das Straßennutzfahrzeug dazu eingerichtet sein, die folgenden Schritte durchzuführen:
- Betreiben der Transportkältemaschine im Normalbetrieb,
- Betreiben der Transportkältemaschine im Lüfterbetrieb nach dem Betreiben im Normalbetrieb.

14. Verfahren zum Betreiben eines Straßennutzfahrzeugs (1) nach einem der vorangehenden Ansprüche, umfassend die Schritte:
- Betreiben der Transportkältemaschine im Normalbetrieb nach dem Betreiben im Normalbetrieb
- Betreiben der Transportkältemaschine im Lüfterbetrieb, wobei das Verfahren insbesondere ferner umfasst
- Betreiben der Transportkältemaschine in einem ausgeschalteten Betrieb oder im Normalbetrieb nach dem Betreiben im Lüfterbetrieb.

15. Verfahren nach Anspruch 14, wobei
- ein Wechsel von dem Normalbetrieb in den Lüfterbetrieb abhängig von einem Zustand der Energiequelle (110) und/oder des Energieversorgungsanschlusses (112), von dem Ladezustand des elektrischen Energiespeichers (120), von einer Temperatur, insbesondere einer gemessenen Temperatur, insbesondere einer von dem Temperatursensor (260) gemessenen Temperatur und/oder von einer Dauer, insbesondere einer vorgegebenen Dauer, durchgeführt wird.

## Geänderte Patentansprüche

### Geänderte Patentansprüche gemäss Regel 137(2) EPÜ.

1. Straßennutzfahrzeug (1) umfassend
- einen elektrischen Energiespeicher (120), wobei der elektrische Energiespeicher (120) dazu eingerichtet ist, in einem 12V/24V-Spannungsband elektrische Energie bereitzustellen,
- eine Transportkältemaschine (2) umfassend:
(i) zumindest einen Lüfter (220), wobei der Lüfter (220) dazu eingerichtet ist, in einem 48V-Spannungsband mit elektrischer Energie betrieben zu werden,
(ii) einen Spannungswandler (210), wobei der Spannungswandler (210) dazu eingerichtet ist, einen bidirektionalen elektrischen Leistungsfluss zwischen dem 12V/24V-Spannungsband an einem 12V/24V-Anschluss des Spannungswandlers und dem 48V-Spannungsband an einem 48V-Anschluss des Spannungswandlers zu ermöglichen, wobei der 12V/24V-Anschluss mit dem elektrischen Energiespeicher (120) elektrisch verbunden ist und der 48V-Anschluss mit dem Lüfter (220) elektrisch verbunden ist,
(iii) eine Energiequelle (110), wobei die Energiequelle (110) dazu eingerichtet ist, die Transportkältemaschine (1) in einem Normalbetrieb mit elektrischer Energie zu versorgen, und/oder
einen Energieversorgungsanschluss (112), wobei der Energieversorgungsanschluss (112) dazu eingerichtet ist, elektrische Energie zur Versorgung der Transportkältemaschine (1) in dem Normalbetrieb von einer externen elektrischen Energieversorgung zu empfangen,
(iv) eine temperaturerzeugende Komponente (23),
wobei das Straßennutzfahrzeug (1) dazu eingerichtet ist, in einem Lüfterbetrieb der Transportkältemaschine (2) zumindest einen Lüfter der Transportkältemaschine (2) aus dem elektrischen Energiespeicher (120) mittels des Spannungswandlers (210) mit elektrischer Energie zu versorgen, wobei die Transportkältemaschine (2) in dem Lüfterbetrieb weder aus der Energiequelle (110) noch über den Energieversorgungsanschluss (112) mit elektrischer Energie versorgt wird, und
wobei das Straßennutzfahrzeug (1) und/oder die Transportkältemaschine (2) dazu eingerichtet ist, im Lüfterbetrieb eine temperaturerzeugende Komponente der Transportkältemaschine (2) zu deaktivieren.

2. Straßennutzfahrzeug (1) nach Anspruch 1, wobei das Straßennutzfahrzeug (1) dazu eingerichtet ist, im Normalbetrieb den elektrischen Energiespeicher (120) mittels des Spannungswandlers (210) mit elektrischer Energie zu versorgen, insbesondere aufzuladen.

3. Straßennutzfahrzeug (1) nach Anspruch 1 und 2, wobei die Transportkältemaschine im Normalbetrieb dauerhaft betrieben wird, um einen Innenraum, insbesondere einen Laderaum, des Straßennutzfahrzeugs (1) zu temperieren, insbesondere zu heizen und/oder zu kühlen .

4. Straßennutzfahrzeug (1) nach einem der Ansprüche 1 bis 3, wobei die Energiequelle (110) ein Generator ist, insbesondere ein mit einem Brennstoff, insbesondere einem fossilen Brennstoff, betriebener Generator, insbesondere ein Dieselgenerator, und/oder wobei der Energieversorgungsanschluss (112) eine Ladebuchse, insbesondere für eine Ladeinfrastruktur, und/oder eine Drehstromsteckdose umfasst.

5. Straßennutzfahrzeug (1) nach einem der Ansprüche 1 bis 4, wobei der zumindest eine Lüfter (220) dazu eingerichtet ist:
(i) temperierte Luft von der Transportkältemaschine (2) in einen Innenraum des Straßennutzfahrzeugs (1) zu transportieren, und/oder
(ii) Außenluft in die Transportkältemaschine (2) zu transportieren, und/oder
(iii) zumindest einen Teil der Transportkältemaschine (2) zu lüften, insbesondere zu kühlen.

6. Straßennutzfahrzeug (1) nach einem der Ansprüche 1 bis 5, wobei die Transportkältemaschine (2) in einem Luftansaugbereich (270) der Transportkältemaschine (2) zumindest einen Temperatursensor (260) umfasst.

7. Straßennutzfahrzeug (1) nach einem der Ansprüche 1 bis 6, wobei der elektrische Energiespeicher (120) dazu eingerichtet ist, ein Bordnetz des Straßennutzfahrzeugs (1) mit elektrischer Energie zu versorgen, wobei das Bordnetz insbesondere in einem 12V/24V-Spannungsband betrieben wird.

8. Straßennutzfahrzeug (1) nach einem der Ansprüche 1 bis 7, wobei das Straßennutzfahrzeug zumindest einen Anhänger für Straßennutzfahrzeuge umfasst oder ein solcher Anhänger ist.

9. Straßennutzfahrzeug (1) nach einem der Ansprüche 1 bis 8, wobei das Straßennutzfahrzeug (1), insbesondere die Transportkältemaschine (2), eine Steuerungseinrichtung (250) umfasst, wobei die Steuerungseinrichtung (250) dazu eingerichtet ist, den zumindest einen Lüfter (220) zu steuern, insbesondere im Lüfterbetrieb zu steuern.

10. Straßennutzfahrzeug (1) nach Anspruch 9, wobei die Steuerungseinrichtung (250) zumindest teilweise von dem elektrischen Energiespeicher (120) mit elektrischer Energie versorgt ist.

11. Straßennutzfahrzeug (1) nach einem der Ansprüche 1 bis 10, wobei die Energiequelle (110) und/oder der Energieversorgungsanschluss (112) dazu eingerichtet ist, in einem 48V-Spannungsband elektrische Energie bereitzustellen.

12. Straßennutzfahrzeug (1) nach einem der Ansprüche 1 bis 11, wobei der zumindest eine Lüfter (220) dazu eingerichtet ist, in zumindest zwei voneinander verschiedenen Lüftintensitäten betrieben zu werden.

13. Straßennutzfahrzeug (1) nach einem der Ansprüche 1 bis 12, wobei das Straßennutzfahrzeug dazu eingerichtet sein, die folgenden Schritte durchzuführen:
- Betreiben der Transportkältemaschine im Normalbetrieb,
- Betreiben der Transportkältemaschine im Lüfterbetrieb nach dem Betreiben im Normalbetrieb.

14. Verfahren zum Betreiben eines Straßennutzfahrzeugs (1) nach einem der vorangehenden Ansprüche, umfassend die Schritte:
- Betreiben der Transportkältemaschine im Lüfterbetrieb nach dem Betreiben im Normalbetrieb
- Betreiben der Transportkältemaschine im Lüfterbetrieb, wobei das Verfahren insbesondere ferner umfasst
- Betreiben der Transportkältemaschine in einem ausgeschalteten Betrieb oder im Normalbetrieb nach dem Betreiben im Lüfterbetrieb, wobei im ausgeschalteten Betrieb der Großteil und/oder alle Komponenten der Transportkältemaschine (2) mit einer Leistungsaufnahme von mindestens 100W ausgeschaltet sind, wobei
- ein Wechsel von dem Normalbetrieb in den Lüfterbetrieb abhängig von einem Zustand der Energiequelle (110) und/oder des Energieversorgungsanschlusses (112), von dem Ladezustand des elektrischen Energiespeichers (120), von einer Temperatur, insbesondere einer gemessenen Temperatur, insbesondere einer von dem Temperatursensor (260) gemessenen Temperatur und/oder von einer Dauer, insbesondere einer vorgegebenen Dauer, durchgeführt wird.
